(19) Europäisches Patentamt
European Patent Office
Office européen des brevets

(11) EP 2 163 665 A1

(12) EUROPEAN PATENT APPLICATION
published in accordance with Art. 153(4) EPC

(43) Date of publication:
**17.03.2010 Bulletin 2010/11**

(21) Application number: **08777202.6**

(22) Date of filing: **13.06.2008**

(51) Int Cl.:
***D01F 6/94*** *(2006.01)* ***C08K 5/13*** *(2006.01)*
***C08K 5/30*** *(2006.01)* ***C08K 5/3492*** *(2006.01)*
***C08L 75/04*** *(2006.01)*

(86) International application number:
**PCT/JP2008/060841**

(87) International publication number:
**WO 2009/011189 (22.01.2009 Gazette 2009/04)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.06.2007 JP 2007164773**

(71) Applicants:
- **Opelontex Co., Ltd.**
  **Chuo-ku**
  **Tokyo 103-0023 (JP)**
- **Invista Technologies S.à.r.l.**
  **9000 St. Gallen (CH)**

(72) Inventors:
- **TANAKA, Toshihiro**
  **Otsu-shi**
  **Shiga 520-8558 (JP)**
- **HARA, Masashi**
  **Otsu-shi**
  **Shiga 520-8558 (JP)**
- **KANBAYASHI, Tatsuaki**
  **Otsu-shi**
  **Shiga 520-8558 (JP)**

(74) Representative: **Cockerton, Bruce Roger**
**Carpmaels & Ransford**
**43-45 Bloomsbury Square**
**London**
**WC1A 2RA (GB)**

# (54) ELASTIC POLYURETHANE YARN AND PROCESS FOR PRODUCTION THEREOF

(57) Disclosed is an elastic polyurethane yarn which can exhibit excellent heat resistance even when an unsaturated fatty acid or a heavy metal is attached to the yarn during dyeing at a high temperature, and which has high elastic recovery and high strenth/elongation. Specifically disclosed is an elastic yarn comprising a polyurethane mainly composed of a polymer diol and a diisocyanate, which contains (a) a hindered phenol compound, (b) an N,N-dialkylsemicarbazide compound and (c) a nitrogenated aromatic compound, wherein the nitrogenated aromatic compound (c) is contained in an amount of 0.01 to 0.30 weight % inclusive.

EP 2 163 665 A1

## Description

### Technical Field

The present invention relates to a polyurethane elastic yarn having high heat resistance during dyeing (high heat resistance particularly when unsaturated fatty acids or heavy metals are attached), high elastic recoverability, high strength and ductility and the like, and a production method thereof.

### Background Art

Due to its excellent expansion and compression characteristics, elastic fiber is widely used in elastic fabric applications such as legwear, innerwear and sportswear, and in industrial materials applications. In polyurethane elastic yarn which is generally used for such elastic fibers, that which has high strength and ductility, high elastic recoverability, high heat resistance and high setting ability has been sought. Above all, high heat resistance is the most important characteristic in applications where it is used in blended fabrics combined with polyester yarn, and heat resistance during the dyeing process is particularly important.

That is, when it is used in a blended fabric with polyester or when it is dyed an intermediate color, the dyeing temperature during the dyeing process tends to be high. On top of that, increasingly, dry heat treatment at high temperature is performed before dyeing in order to obtain good stretch characteristics, dimensional stability and surface quality. For this reason, the heat resistance of the elastic yarn must be high.

Also, raw thread oils provided in the manufacturing process are attached to the elastic yarn. In addition, machine oil adhered to the weaving machine is transferred and becomes attached to the elastic yarn during the weaving process. Unsaturated fatty acids are generally used as raw thread oils in polyester yarn and nylon yarn. On the other hand, oils which contain thermal embrittlement exacerbating substances of unsaturated fatty acids are provided in elastic yarn used to make blended elastic fabric by blending with polyester yarn or nylon yarn. Further, trace amounts of metal components originating from the machine are mixed in with said oils. If thermal embrittlement exacerbating substances of unsaturated fatty acids and trace amounts of metal components are attached to elastic yarn, degradation of the polyurethane elastic yarn is exacerbated by their interaction, causing breakage or a partial reduction of strength of the yarn. Depending on the case, tiny holes may occur in the fabric, which causes unexpected serious problems.

Excellent heat resistance is demanded even in the state where unsaturated fatty acids or metal components as well as oils are attached to the elastic yarn. Although it conflicts with high heat resistance, the ability to be thermally set at the same or lower temperature than in the past is also sought.

Incidentally, polyurethane yarns which contain benzotriazole-based ultraviolet absorbent agents to increase prevention of light embrittlement have the problem that they tend to yellow when treated with water that contains copper. To prevent this yellowing, a technique has been proposed whereby the elastic yarn is made to contain a metal deactivation agent, so that no complexes are produced between the benzotriazole-based ultraviolet absorbent agent and copper (refer to Patent Document 1). In polyurethane elastic yarn which contains the amount of benzotriazole-based ultraviolet absorbent agent required to increase light embrittlement prevention, yellowing due to benzotriazole-based ultraviolet absorbent agent and copper is prevented due to the fact that it also contains a metal deactivation agent, but it is difficult to increase heat resistance during high-temperature dyeing or dry heat treatment of polyurethane elastic yarn when a metal deactivation agent is added. For example, in cases where dry heat treatment is performed at high temperature before dyeing, and in cases where the polyurethane elastic yarn is made into a blended fabric with polyester yarn and dyed at high temperature, heat resistance may be insufficient and use may be restricted.

In addition, a technique has been proposed for polyurethane elastic yarn which contains the amount of triazine photoabsorbent agent and N,N-dialkyl semicarbazide groups required to protect against fading due to atmospheric pollution and light (refer to Patent Document 2). In a polyurethane elastic yarn which contains the amount of photoabsorbent agent required to protect against fading due to atmospheric pollution and light, fading is prevented due to the fact that semicarbazide groups are also introduced, but addition of excessive photoabsorbent agent tends to hamper heat resistance during dry heat treatment or high-temperature dyeing of polyurethane elastic yarn. For this reason, in cases where the polyurethane elastic yarn is made into a blended fabric with polyester yarn and dyed at high temperature, heat resistance may be insufficient and use may be restricted.

Patent Document 1: Japanese Unexamined Patent Application Publication no. 2000-169700

Patent Document 2: Patent no. 3028237

Disclosure of the Invention

Problems to be Resolved by the Invention

The objectives of the present invention are to provide a polyurethane elastic yarn which resolves the problems of prior art described above, which exhibits excellent heat resistance even when unsaturated fatty acids or heavy metals are attached during dyeing at high temperature, and has high elastic recoverability and high strength and ductility, and to provide a production method thereof.

Means for Resolving Problems

To achieve the aforementioned objectives, the polyurethane elastic yarn of the present invention employs the following means.

That is, it is an elastic yarn made from polyurethane which has polymer diol and diisocyanate as its main constituent ingredients, **characterized in that** said polyurethane elastic yarn comprises a hindered phenol compound (a), an N,N-dialkyl semicarbazide compound (b) and a nitrogen-containing aromatic compound (c), wherein the contained amount of the nitrogen-containing aromatic compound (c) is at least 0.01 wt% and at most 0.30 wt%.

Also, the production method of polyurethane elastic yarn of the present invention is **characterized in that** a hindered phenol compound (a), an N,N-dialkyl semicarbazide compound (b) and a nitrogen-containing aromatic compound (c) are added to a solution of polyurethane which has polymer diol and diisocyanate as its main constituent ingredients, thereby creating a polyurethane spinning solution containing the nitrogen-containing aromatic compound (c) in a proportion of at least 0.01 wt% and at most 0.30 wt% with respect to polyurethane, which is then spun.

Effect of the Invention

The polyurethane elastic yarn according to the present invention exhibits excellent heat resistance (particularly thermal aging resistance) even when unsaturated fatty acids or heavy metals are attached to the yarn when dyed at high temperature. Moreover, it has high elastic recoverability and high strength and ductility. As a result, clothing and the like that uses this elastic yarn has excellent desorption characteristics, fit, feel, dyeability, discoloration resistance and quality of appearance.

Preferred Embodiments of the Invention

The present invention is described in further detail below.

First, the polyurethane that is the base polymer that constitutes the polyurethane elastic yarn of the present invention is described.

The polyurethane used in the present invention is not particularly limited, and can be any polyurethane that has polymer diol and diisocyanate as main constituent ingredients. Also, its method of synthesis is not particularly limited.

For example, it can be polyurethane urea made from polymer diol and diisocyanate and low-molecular-weight diamine, and it can be polyurethane made from polymer diol and diisocyanate and low-molecular weight diol. Also, it can be polyurethane urea which uses a compound having hydroxyl groups and amino groups as chain extenders. Furthermore, it is preferred that a polyfunctional glycol or isocyanate or the like which is at least trifunctional is also added, within a range which does not hamper the effect of the present invention.

Here, typical structural units which constitute the polyurethane used in the present invention are described.

As the polymer diol of a structural unit which constitutes the polyurethane, polyether-based glycols, polyester-based glycols, polycarbonate diols and the like are preferred. It is particularly preferred to use a polyether-based glycol, from the viewpoint of providing the yarn with pliability and ductility.

As for the polyether-based glycol, it is preferred that it contains a copolymer diol compound containing a unit represented by general formula (I) below.

[Compound 1]

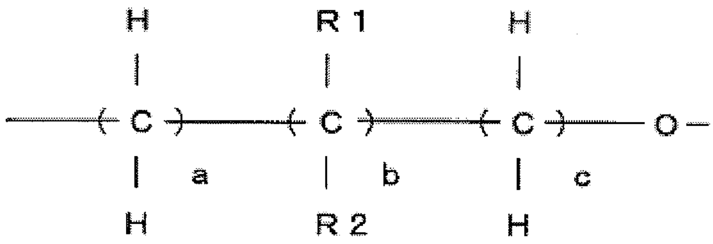

(I)

(Here, a and c are integers from 1 to 3, b is an integer from 0 to 3, and R1 and R2 are H or alkyl groups having 1 to 3 carbons.)

Specific examples of this polyether-based diol compound include polyethylene glycol, modified polyethylene glycol, polypropylene glycol, polytrimethylene ether glycol, polytetramethylene ether glycol (abbreviated as "PTMG" hereinafter), modified PTMG which is a copolymer of tetrahydrofuran (abbreviated as "THF" hereinafter) and 3-methyl-THF, modified PTMG which is a copolymer of THF and 2,3-dimethyl-THF, modified PTMG which is a copolymer of THF and neopentyl glycol, random copolymers in which THF and ethylene oxide and/or propylene oxide are irregularly arranged, and the like. One of these polyether-based glycols may be used, or a mixture or copolymer of two or more may be used. Among these, PTMG or modified PTMG is preferred.

From the viewpoint of increasing abrasion resistance and light resistance in the polyurethane yarn, it is preferred to use a polyester-based glycol such as polyester diol having a side chain obtained by condensation polymerization of adipic acid or the like with a mixture of butylene adipate, polycaprolactone diol, 3-methyl-1,5-pentane diol and polypropylene polyol; or a polycarbonate diol containing dicarboxylic acid ester units derived from a diol component and a dicarboxylic acid component made from 3,8-dimethyldecane dioic acid and/or 3,7-dimethyldecane dioic acid; or the like.

Also, one of these polymer diols may be used, or a mixture or copolymer of two or more may be used.

The molecular weight of these polymer diols is preferably 1000 to 8000, more preferably 1800 to 6000, by number average molecular weight, in order to meet the desired levels of ductility, strength, heat resistance and the like when it is made into elastic yarn. By using a polymer diol with molecular weight in this range, elastic yarn having excellent ductility, strength, elastic recoverability and heat resistance can be obtained.

As the diisocyanate of a structural unit which constitutes the polyurethane, aromatic diisocyanates such as diphenylmethane diisocyanate (abbreviated as "MDI" hereinafter), tolylene diisocyanate, 1,4-diisocyanate benzene, xylylene diisocyanate and 2,6-naphthalene diisocyanate are particularly suitable for synthesizing polyurethane of heat resistance and strength. In addition, preferred examples of alicyclic diisocyanates include methylenebis(4-cyclohexyl isocyanate) (abbreviated as "PICM" hereinafter), isophorone diisocyanate, methylcyclohexane-2,4-diisocyanate, methylcyclohexane-2,6-diisocyanate, cyclohexane-1,4-diisocyanate, hexahydro xylylene diisocyanate, hexahydro tolylene diisocyanate and octahydro-1,5-naphthalene diisocyanate. Aliphatic diisocyanates can be used effectively, particularly for inhibiting yellowing of the polyurethane elastic yarn. One of these diisocyanates can be used alone, or two or more can be used in combination.

As the chain extender of a structural unit which constitutes the polyurethane, it is preferred that at least one compound selected from low-molecular-weight diamines and low-molecular-weight diols is used. Furthermore, it can have a hydroxyl group and amino group in the molecule, as in ethanolamine.

As the molecular weight of the low-molecular-weight diamines and low-molecular-weight diols, 30 to 300 is preferred, and 40 to 200 is more preferred, from the viewpoint of obtaining a high-melting-point polyurethane.

Preferred examples of low-molecular-weight diamines include hydrazine, ethylenediamine, 1,2-propanediamine, 1,3-propanediamine, hexamethylenediamine, p-phenylenediamine, p-xylylenediamine, m-xylylenediamine, p,p'-methylenedianiline, 1,3-cyclohexyldiamine, hexahydro metaphenylenediamine, 2-methylpentamethylenediamine and bis(4-aminophenyl)phosphine oxide. It is preferred to use one or two or more types among these. Ethylenediamine is particularly preferred. By using ethylenediamine, yarn having excellent ductility, elastic recoverability and heat resistance can be obtained. Triamine compounds that can form a bridge structure - for example, diethylenetriamine and the like - can be added to these chain extenders to a degree such that the effect of the present invention is not lost.

Typical low-molecular-weight diols include ethylene glycol, 1,3-propane diol, 1,4-butane diol, bishydroxyethoxybenzene, bishydroxyethyleneterephthalate, 1-methyl-1,2-ethane diol and the like. It is preferred to use one or two or more types among these. Ethylene glycol, 1,3-propane diol and 1,4-butane diol are particularly preferred. When these are used, high heat resistance of the diol-extended polyurethane is high, and yarn having high strength can be obtained.

It is preferred that the number average molecular weight of the polyurethane that constitutes the polyurethane

elastic yarn of the present invention is in the range of 40,000 to 150,000 from the viewpoint of obtaining fibers of high durability and strength. Here, molecular weight is the value in terms of polystyrene, measured by GPC.

It is particularly preferred that the polyurethane that constitutes the elastic yarn of the present invention is made from polymer diol and diisocyanate, and the high-temperature melting point is preferably in the range of 200°C to 300°C, from the viewpoint of obtaining excellent heat resistance and having no problems in practical use, including the ability to pass through the process steps. Here, the high-temperature melting point means the melting point of the so-called hard segment crystals of the polyurethane or polyurethane urea when measured by DSC.

That is, because its ductility is high, because it has no problems in practical use, including the ability to pass through the process steps as described above, and because its heat resistance is high, what is particularly preferred is elastic yarn produced from polyurethane having a high-temperature melting point in the range of 200°C to 300°C, wherein the polyurethane is synthesized using, as the polymer diol, PTMG of molecular weight in the range of 1000 to 6000; and, as the diisocyanate, MDI; and, as a chain extender, at least one type selected from the group made up of ethylene glycol, 1,3-propane diol, 1,4-butane diol, ethylenediamine, 1,2-propanediamine and 1,3-propanediamine.

As a method for setting the high-temperature melting point of the polyurethane yarn to the range of 200°C to 300°C, it is preferred that the optimal ratio of diisocyanate and polymer diol and chain extender is selected by testing in advance. Such polyurethane is preferred as the polyurethane used in the present invention.

The polyurethane elastic yarn of the present invention is an elastic yarn which has the aforementioned polyurethane as its base polymer, which comprises a hindered phenol compound (a), an N,N-dialkyl semicarbazide compound (b) and a nitrogen-containing aromatic compound (c), wherein the contained amount of the nitrogen-containing aromatic compound (c) is at least 0.01 wt% and at most 0.30 wt%.

The hindered phenol compound (a) (abbreviated as "compound (a)" hereinafter), the N,N-dialkyl semicarbazide compound (b) (abbreviated as "compound (b)" hereinafter) and the nitrogen-containing aromatic compound (c) (abbreviated as "compound (c)" hereinafter) are not only effective for increasing general aging resistance such as an antioxidant effect by radical capture and for increasing general light resistance by specific ultraviolet absorption, but they can also improve degradation resistance of the polyurethane elastic yarn against these influences because they capture unsaturated fatty acids and metal components and make them harmless.

Specifically, compound (a) and compound (b) work synergistically primarily in capturing metals. Therefore, by using these compounds in combination, excellent heat resistance is exhibited and the desired effects of the present invention are exhibited even when polyurethane elastic yarn to which unsaturated fatty acids and heavy metals are attached are dyed at high temperature. Thus, if the contained amount of compound (c) (proportion with respect to yarn) is at least 0.01 wt% and at most 0.30 wt%, the antioxidant effect is increased by the synergistic effect of compound (a) and compound (b), and the trace amounts (100 ppm or less) of heavy metals that are mixed in during dyeing are sufficiently captured and made harmless. Here, the contained amount (proportion with respect to yarn) of compound (c) of at least 0.01 wt% and at most 0.30 wt % is in keeping with the fact that aromatic ring nitrogen atoms are present in the range of 5 to 200 milliequivalents per kg (meq/kg) of yarn.

In contrast, since aromatic rings that contain nitrogen atoms are easily pyrolyzed, if the contained amount of compound (c) is too large (that is, if aromatic ring nitrogen atoms exceed 200 milliequivalents), radical generation by pyrolysis takes priority over the synergistic effect of compound (a) and compound (b), heat resistance is reduced, and quinone structures are formed which cause thermal fading, and as a result, functions such as high heat resistance during dyeing are not obtained. There are cases where a large amount of compound (c) is contained as a light resistant agent, but if the contained amount exceeds 0.30 wt%, effects such as high heat resistance during dyeing, which is an objective of the present invention, are not obtained. From these points, it is preferred that the contained amount of compound (c) is a suitable amount which is not excessive. Specifically, the range is preferably 0.01 to 0.25 wt%, more preferably 0.05 to 0.20 wt%, and most preferably 0.07 to 1.80 [*sic*] wt%.

In addition, the effect of capturing unsaturated fatty acids and metals is unsatisfactory if there is a deficiency in either (a) or compound (b). It is preferred that the contained amounts of these are large enough to obtain the effect of the present invention, but if they are too large, the original good characteristics of polyurethane elastic yarn tend to be lost. Therefore, it is preferred that the contained amount of compound (a) is at least 0.1 wt% and at most 6.0 wt%, and the contained amount of compound (b) is at least 1.0 wt% and at most 6.0 wt%.

In this way, in the present invention, it is required that a hindered phenol compound (a), an N,N-dialkyl semicarbazide compound (b) and a nitrogen-containing aromatic compound (c) are contained together in the polyurethane elastic yarn.

As compound (a) - that is, the hindered phenol compound - used in the present invention, phenol compounds that are generally known as antioxidants can be used. For example, 3,5-di-t-butyl-4-hydroxy-toluene, n-octadecyl-β-(4'-hydroxy-3',5'-di-t-butylphenyl)propionate, tetrakis[methylene-3-(3',5'-di-t-butyl-4'-hydroxyphenyl)propionate]methane, 1,3,5-trimethyl-2,4,6'-tris(3,5-di-t-butyl-4-hydroxybenzyl)benzene, calcium(3,5-di-t-butyl-4-hydroxy-benzyl-monoethyl-phosphate), triethylene glycol-bis[3-(3-t-butyl-5-methyl-4-hydroxyphenyl)propionate], 3,9-bis[1,1-dimethyl-2-{β-(3-t-butyl-4-hydroxy-5-methylphenyl)propionyloxy}ethyl]2,4,8,10-tetraoxaspiro[5,5]undecane, tocopherol, 2,2'-ethylidenebis(4,6-di-t-butylphenol), N,N'-bis[3-(3,5-di-t-butyl-4-hydroxyphenyl)propionyl]hydrazine, 2,2'-oxamidebis[ethyl-3-(3,5-di-t-butyl-4-hydroxyphenyl)propionate], 1,1,3-tris(2-methyl-4-hydroxy-5-t-butylphenyl)butane, ethylene-1,2-bis(3,3-bis[3-t-butyl-4-hydroxyphenyl]butyrate), ethylene-1,2-bis(3-[3-t-butyl-4-hydroxyphenyl]butyrate), 1,1-bis(2-methyl-5-t-butyl-4-hydroxyphenyl)butane, 1,1,3-tris(2-methyl-5-t-butyl-4-hydroxyphenyl)butane, 1,3,5-tris(3',5'-di-t-butyl-4'-hydroxybenzyl)-S-triazine-2,4,6(1H,3H,5H)-trione, 1,3,5-tris(3'-t-butyl-4'-hydroxy-5-methylbenzyl)-S-triazine-2,4,6(1H,3H,5H)-trione and 1,3,5-tris(4-t-butyl-3-hydroxy-2,6-dimethylbenzyl)-1,3,5-triazine-2,4,6(1H,3H,5H)-trione can be appropriately used. In addition, high-molecular-weight hindered phenol compounds that are known as antioxidants for polyurethane elastic yarn can be appropriately used.

Specific examples of preferred high-molecular-weight hindered phenol compounds include addition polymers of divinylbenzene and cresol, isobutylene adducts of addition polymers of dicyclopentadiene and cresol, and polymers of chloromethylstyrene and compounds such as cresol, ethylphenol or t-butylphenol. Here, divinylbenzene and chloromethylstyrene can be p- or m-. Cresol, ethylphenol and t-butylphenol can be o-, m- or p-.

Above all, it is preferred that it is a compound having a molecular weight of at least 300, from the viewpoint of obtaining a stable viscosity of the source spinning solution of polyurethane yarn, controlling loss due to volatilization during spinning, and obtaining good spinnability. In addition, in order to efficiently obtain high spinning speed, heat resistance during dyeing, resistance to unsaturated fatty acids and resistance to heavy metals, it is preferred to use any one or a combination of the following polymers having 6 to 12 repetitions: 1,3,5-tris(4-t-butyl-3-hydroxy-2,6-dimethylbenzyl)-1,3,5-triazine-2,4,6(1H,3H,5H)-trione, triethylene glycol-bis[3-(3-t-butyl-5-methyl-4-hydroxyphenyl)propionate], ethylene-1,2-bis(3,3-bis[3-t-butyl-4-hydroxyphenyl]butyrate), or an adduct of divinylbenzene and p-cresol. Among these, 1,3,5-tris(4-t-butyl-3-hydroxy-2,6-dimethylbenzyl)-1,3,5-triazine-2,4,6(1H,3H,5H)-trione is particularly preferred. Also, if triazine compounds are selected as compound (a) and compound (c), a particularly good synergistic effect can be obtained in heat resistance during dyeing. Among these, it is particularly preferred that compound (a) is 1,3,5-tris(4-t-butyl-3-hydroxy-2,6-dimethylbenzyl)-1,3,5-triazine-2,4,6(1H,3H,5H)-trione, and compound (c) is 2,4-di(2',4'-dimethylphenyl)-6-(2"-hydroxy-4"-alkoxyphenyl)-1,3,5-triazine.

Compound (b) used in the present invention is an N,N-dialkyl semicarbazide compound, and is not particularly restricted provided that it is a compound having an N,N-dialkyl semicarbazide in the molecule. For example, it can be a monomeric compound of relatively low molecular weight below approximately 1000 (called "monomeric N,N-dialkyl semicarbazide" hereinafter). Also, it can be an oligomer or polymer of relatively high molecular weight above approximately 1000, having N,N-dialkyl semicarbazide at a terminal (called "polymer having N,N-dialkyl semicarbazide at a terminal" hereinafter). Also, a monomeric N,N-dialkyl semicarbazide and a polymer having N,N-dialkyl semicarbazide at a terminal can be used in combination.

Preferred specific examples of the monomeric N,N-dialkyl semicarbazide include 1,6-hexamethylenebis(N,N-dimethyl semicarbazide), 4,4'-(methylenedi-p-phenylene)bis(N,N-dimethyl semicarbazide), 4,4'-(methylenedi-p-phenylene)bis(N,N-diethyl semicarbazide), 4,4'-methylenedi-p-phenylene)bis(N,N-di-i-propyl semicarbazide), α,α-(p-xylylene)bis(N,N-dimethyl semicarbazide), 1,4-cyclohexylenebis(N,N-dimethyl semicarbazide) and burette-tri(hexamethylene-N,N-dimethyl semicarbazide). Particularly preferred are 1,6-hexamethylenebis(N,N-dimethyl semicarbazide) and 4,4'-(methylenedi-p-phenylene)bis(N,N-dimethyl semicarbazide).

Preferred specific examples of the polymer having N,N-dialkyl semicarbazide at a terminal include a polymers having an N,N-dialkyl semicarbazide terminal group in polyurethane or polyurethane urea obtained from organic diisocyanate and a tertiary nitrogen-containing diamine and a tertiary nitrogen-containing diol known as an antioxidant for polyurethane elastic yarn. Even with a low concentration of N,N-dialkyl semicarbazide, compounds having tertiary nitrogen on the main chain and N,N-dialkyl semicarbazide at a terminal can exhibit high heat resistance during dyeing, and can have higher elastic recoverability and higher strength and ductility than the case where it is not included.

Preferred specific examples of this tertiary nitrogen-containing diol include N-methyl-N,N-diethanolamine, N-methyl-N,N-dipropanolamine, N-methyl-N,N-diisopropanolamine, N-butyl-N,N-diethanolamine, N-t-butyl-N,N-diethanolamine (abbreviated as "TBDEA" hereinafter), N-octadecane-N,N-diethanolamine, N-benzyl-N,N-diethanolamine (abbreviated as "BDEA" hereinafter) and N-t-butyl-N,N-diisopropanolamine. Piperazine derivatives such as bis(hydroxyethyl)piperazine and bis(hydroxyisopropyl)piperazine can also be used. Among these, TBDEA or BDEA is particularly preferred.

Preferred specific examples of the tertiary nitrogen-containing diamine include N-methyl-3,3'-iminobis(propylamine) (abbreviated as "MIBPA" hereinafter), N-butyl-aminobis-propylamine, N-methyl-aminobis-ethylamine, N-t-butyl-aminobis-propylamine, piperazine-N,N'-bis(3-aminopropyl) (abbreviated as "BAPP" hereinafter) and piperazine-N,N'-bis(2-aminoethyl), among which MIBPA or BAPP is particularly preferred.

Preferred specific examples of the organic diisocyanate include PICM, isophorone diisocyanate (abbreviated as "IPDI" hereinafter), lysine diisocyanate, and aliphatic diisocyanates such as DDI derived from dimer acids. Among these, PICM or IPDI is particularly preferred.

In order to form a terminal semicarbazide group by a reaction with organic diisocyanate, it is preferred that substituted hydrazine is used. Preferred specific examples of the substituted hydrazine include N,N-dimethylhydrazine

(abbreviated as "UDMH" hereinafter), N,N-dimethylhydrazine, N,N-dipropylhydrazine, N,N-diisopropylhydrazine, N,N-dibutylhydrazine, N,N-diisobutylhydrazine, N,N-dihydroxyethylhydrazine (abbreviated as "UDHEH" hereinafter) and N, N-dihydroxyisopropylhydrazine. Among these, UDMH or UDHEH is particularly preferred.

It is preferred that the polymer having an N,N-dialkyl semicarbazide terminal group in polyurethane or polyurethane urea is prepared by completely reacting an isocyanate terminal prepolymer and N,N-dialkylhydrazine by adding hydrazine in a stoichiometric amount before adding other chain stoppers.

The preferred average molecular weight of the polymer having N,N-dialkyl semicarbazide at a terminal is at least 1000 and at most 20,000. Also, it is preferred that semicarbazide groups are present in the range of 0.1 to 100 milliequivalents per kg (meq/kg) of polymer having N,N-dialkyl semicarbazide at a terminal.

Above all, a polymer having an N,N-dialkyl semicarbazide terminal group in polyurethane or polyurethane urea is preferred, from the viewpoint of obtaining uniform viscosity and good spinnability of the source spinning solution of polyurethane yarn. In addition, in order to efficiently obtain high spinning speed, heat resistance during dyeing, resistance to unsaturated fatty acids and resistance to heavy metals, it is preferred that a large amount of this N,N-dialkyl semicarbazide compound is included, but from the viewpoint of obtaining better basic characteristics of the polyurethane yarn, it is preferred that the amount is not excessive. In general, a contained amount in the range of at least 0.1 wt% and at most 6.0 wt% is preferred. Furthermore, it is preferred that the optimal amount is determined by testing in advance in accordance with the application.

Preferred examples of compound (b) for obtaining polyurethane elastic yarn having high heat resistance during dyeing at high temperature include compounds in which dimethyl semicarbazide is formed, by reacting UDMH, on an isocyanate terminal of polyurethane polymer obtained by polymerizing TBDEA and PICM with a ratio between 2:3 and 20:21 in an addition polymer; or a compound in which dimethyl semicarbazide is formed, by reacting UDMH, at a terminal of polyurethane urea polymer in which the ratio of a mixture of MIBPA and PICM to PICM is between 2:3 and 20:21. In addition, in order to obtain a heat-resistant polyurethane elastic yarn which has a thermal history due to being repeatedly submitted to high-temperature dyeing processes, it is preferred that a monomeric N,N-dialkyl semicarbazide of 1,6-hexamethylenebis(N,N-dimethyl semicarbazide) or 4,4'-(methylenedi-p-phenylene)bis(N,N-dimethyl semicarbazide) is used in combination with the aforementioned compound in which dimethyl semicarbazide is formed, by reacting UDMH, on an isocyanate terminal of polyurethane made from TBDEA and PICM or the aforementioned compound in which dimethyl semicarbazide is formed, by reacting UDMH, at a terminal of polyurethane urea polymer made from PICM and a mixture of MIBPA and PICM. It is preferred that semicarbazide groups are contained in the range of 0.1 to 200 milliequivalents per kg (meq/kg) of yarn.

Compound (c) - that is, the nitrogen-containing aromatic compound - used in the present invention is a compound which has a nitrogen-containing heteroaromatic ring in which nitrogen atoms are arranged on an aromatic ring in the molecule. Examples of its chemical structural skeleton include pyrrole, pyridine, carbazole or quinoline having one nitrogen heteroaromatic ring; imidazole, pyrazole, pyritadine, pyrazine, pyrimidine, naphthyridine or phenanthroline having two nitrogen heteroaromatic rings; and triazine, benzotriazole or naphthyridine having three nitrogen heteroaromatic rings. It does not matter if it has hetero atoms other than nitrogen, such as benzothiazole or benzooxazole. Preferred specific examples of such nitrogen-containing aromatic compounds are benzotriazole compounds and triazine compounds which are known as ultraviolet absorbent agents. More specific examples include compounds such as 2-(3,5-di-t-amyl-2-hydroxyphenyl)benzotriazole, 2-(3-t-butyl-2-hydroxyphenyl)-5-chlorobenzotriazole, 2-(2-hydroxy-3,5-bisphenyl)benzotriazole, 2,4-di(2',4'-dimethylphenyl)-6-(2"-hydroxy-4"-alkoxyphenyl)-1,3,5-triazine and 2,2'-(1,4-phenylene)bis[4H-3,1-benzoxizine-4-one]. As brand names, there are Tinuvin-P, Tinuvin-213, Tinuvin-234, Tinuvin-327, Tinuvin-328 and Tinuvin-571 made by Ciba-Geigy; Sumisorb 250 made by Sumitomo Chemical; Cyasorb UV-5411, UV-1164 and UV-3638 made by American Cyanamid; Adeka Stab LA-31 made by ADEKA; and so forth.

As described above, the contained amount of compound (c) must be at least 0.01 wt% and at most 0.30 wt% in order to obtain a polyurethane elastic yarn which has high heat resistance during dyeing, resistance to unsaturated fatty acids and resistance to heavy metals, and which also has high elastic recoverability and high strength and ductility.

From the viewpoint of controlling loss due to volatilization during spinning, it is preferred that compound (c) is a compound having a molecular weight of 300 or above. Also, from the viewpoint of obtaining heat resistance during dyeing and good spinnability, it is preferred that it is a compound which has at least two nitrogen atoms on the aromatic ring. This is surmised to be so that formation of complexes with heavy metals is easy and so that a chelating effect is exhibited. In order to fully demonstrate these effects, it is preferred that the chemical structural skeleton of the nitrogen-containing aromatic compound (c) is triazine. Furthermore, the contained amount of compound (c) is at least 0.01 wt% and at most 0.30 wt%, but it is preferred to determine the optimal value by testing in advance, in accordance with the molecular weight and number of effective nitrogen atoms in the aromatic ring of the compound (c) that is actually used, and in accordance with the application.

To make a polyurethane elastic yarn having particularly high heat resistance in dyeing, 2,4-di(2',4'-dimethylphenyl)-6-(2"-hydroxy-4"-alkoxyphenyl)-1,3,5-triazine is appropriate. As described above, a particularly high synergistic effect is obtained in heat resistance during dyeing by using 1,3,5-tris(4-t-butyl-3-hydroxy-2,6-dimethylbenzyl)-1,3,5-triazine-2,4,6(1H,3H,5H)-trione as compound (a), and 2,4-di(2',4'-dimethylphenyl)-6-(2''-hydroxy-4''-alkoxyphenyl)-1,3,5-triazine as compound (c).

Further, it is preferred that the compounds used as compound (a), compound (b) and nitrogen-containing aromatic compound (c) are liquids having viscosity of at least 10 cP and at most 10,000 P when in a 20 wt% solution in N,N'-dimethylacetoamide (abbreviated as "DMAc" hereinafter) or DMF at 20°C, from the viewpoint of obtaining fast dispersion or dissolution in polyurethane, imparting desired characteristics to the manufactured polyurethane yarn, obtaining polyurethane yarn having a suitable degree of transparency, and preventing discoloration of the yarn even when it is heated in the spinning process and so forth, without reducing the contained amounts of these compounds.

In addition, it is preferred that one or two or more terminal blocking agents is mixed in the polyurethane used in the present invention. Preferred examples of terminal blocking agents include monoamines such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine and diamylamine; monools such as ethanol, propanol, butanol, isopropanol, allyl alcohol and cyclopentanol; and monoisocyanates such as phenyl isocyanate.

Also, in the present invention, the polyurethane elastic yarn or polyurethane spinning solution can contain the following substances within a range that does not hamper the effect of the present invention: various stabilizers other than those described above, such as hindered phenol-based, sulfur-based and phosphorus-based antioxidants, hindered amine-based, triazole-based, benzophenone-based, benzoate-based, nickel-based and salicylic-based photostabilizers, antistatic agents, lubricants, molecular weight adjusters such as peroxides, metal deactivation agents, organic and inorganic nucleating agents, neutralizers, fluorescent brighteners, fillers, flame-retardant agents, flame-retardant adjuvants, pigments and so forth. For example, it is preferred that the following substances are included, and that they are reacted with a polymer: light resistant agents; antioxidants such as 2,6-di-t-butyl-p-cresol (BHT) or benzophenone-based agents; various hindered amine-based agents; various pigments such as iron oxide and titanium oxide; inorganic substances such as zinc oxide, cerium oxide, magnesium oxide and carbon black; fluorine-based or silicone-based resin powder; metal soaps such as magnesium stearate; bactericidal agents containing silver or zinc or compounds thereof; deodorizing agents; antibacterial agents; oils such as silicone and mineral oil; barium sulfate; cerium oxide; and various antistatic agents such as betaine and phosphoric acid-based substances. Also, from the viewpoint of increasing spinning speed in the dry spinning process, microparticles of metal oxides such as titanium dioxide or zinc oxide can be added to the spinning source solution. In addition, from the viewpoint of improving heat resistance and functionality, inorganic substances or inorganic porous substances (for example, bamboo charcoal, charcoal, carbon black, porous mud, clay, diatomaceous earth, coconut-shell activated carbon, coal-based activated carbon, zeolite, pearlite and the like) can be added within a range that does not hamper the effect of the present invention.

These other additives can be added when the spinning source solution is prepared by mixing with the polyurethane solution and the aforementioned modifiers, or they can be put in a polyurethane solution or dispersion in advance before mixing. The contained amounts of additives are appropriately determined according to purpose.

Next, the production method of polyurethane elastic yarn of the present invention is explained in detail.

In the present invention, it is preferred that the polyurethane solution is prepared first. The method of producing the polyurethane solution and the polyurethane contained in this solution can be either melt polymerization or solution polymerization, or another method can be used. However, solution polymerization is more preferred. When solution polymerization is used, it is easy to obtain polyurethane elastic yarn which generates little foreign substance such as gel in the polyurethane, is easy to spin, and has low fineness. Also, solution polymerization has the advantage that there are fewer operations required to make a solution.

Polyurethane that is particularly preferred in the present invention is that having a high-temperature melting point in the range of 200°C to 300°C, synthesized using, as the polymer diol, PTMG of molecular weight in the range of 1000 to 6000; and, as the diisocyanate, MDI; and, as a chain extender, at least one type selected from the group made up of ethylene glycol, 1,3-propane diol, 1,4-butane diol, ethylenediamine, 1,2-propanediamine and 1,3-propanediamine.

Such polyurethane can be obtained by synthesis in DMAc, DMF, DMSO, NMP or the like or a solvent having these as the main ingredient, using the aforementioned starting materials. For example, the so-called one-shot method can be suitably employed, wherein each starting material is put into the solvent and dissolved, then reacted while heating at an appropriate temperature, and polyurethane is thereby obtained. Another method which can be suitably employed is one wherein the polymer diol and diisocyanate are first melt-reacted, immediately after which the reactant is dissolved in a solvent, and this is reacted with the aforementioned chain-extender diol, and polyurethane is thereby obtained.

If a low-molecular-weight diol is used in the chain extender, the typical method of adjusting the high-temperature melting point of the polyurethane to within the range of 200°C to 300°C is to control the types and the ratio of polymer diol, MDI and low-molecular-weight diol. For example, if the molecular weight of the polymer diol is low, polyurethane having a high high-temperature melting point can be obtained by relatively increasing the proportion of MDI. Similarly, if the molecular weight of the low-molecular-weight diol is low, polyurethane having a high high-temperature melting point can be obtained by relatively decreasing the proportion of polymer diol. If the molecular weight of the polymer diol is 1800 or above, in order for the high-temperature melting point to be 200°C or above, it is preferred to perform

polymerization with the proportion of moles of MDI/moles of polymer diol = 1.5 or above.

When synthesizing such polyurethane, it is preferred to use one or a mixture of two or more types of catalyst, such as amine-based catalysts or organometallic catalysts.

Examples of amine-based catalysts include N,N-dimethylcyclohexylamine, N,N-dimethylbenzylamine, triethylamine, N-methylmorpholine, N-ethylmorpholine, N,N,N',N'-tetramethylethylenediamine, N,N,N',N'-tetramethyl-1,3-propanediamine, N,N,N',N'-tetramethylhexanediamine, bis-2-dimethylaminoethylether, N,N,N',N',N'-pentamethyldiethylenetriamine, tetramethylguanidine, triethylenediamine, N,N'-dimethylpiperazine, N-methyl-N'-dimethylaminoethyl-piperazine, N-(2-dimethylaminoethyl)morpholine, 1-methylimidazole, 1,2-dimethylimidazole, N,N-dimethylaminoethanol, N, N,N'-trimethylaminoethylethanolamine, N-methyl-N'-(2-hydroxyethyl)piperazine, 2,4,6-tris(dimethylaminomethyl)phenol, N,N-dimethylaminohexanol, triethanolamine and the like.

Examples of organometallic catalysts include tin octanoate, dibutyltin dilaurylate, dibutyllead octanoate and the like.

The preferred concentration of polyurethane in the polyurethane solution obtained in this way is normally in the range of 30 wt% to 80 wt%.

In the present invention, it is preferred that the aforementioned compound (a), compound (b) and nitrogen-containing aromatic compound (c) are added to the polyurethane solution so as to result in the prescribed contained amounts, and this is used as the polyurethane spinning solution. Any method can be employed as the method of adding the aforementioned compound (a), compound (b) and nitrogen-containing aromatic compound (c) to the polyurethane solution. Typical methods include methods using a static mixer, methods by stirring, methods using a homomixer, methods using a biaxial extruder and the like. Here, it is preferred that the added compound (a), compound (b) and nitrogen-containing aromatic compound (c) are put into solution and added, from the viewpoint of performing homogenous addition to the polyurethane solution.

Furthermore, by addition of compound (a), compound (b) and nitrogen-containing aromatic compound (c) to the polyurethane solution, there are cases where a phenomenon occurs wherein the solution viscosity of the mixed solution after this addition is unexpectedly higher than the solution viscosity of the polyurethane before the addition. Thus, to prevent this phenomenon, it is preferred to mix in one or two or more terminal blocking agents, such as monoamines such as dimethylamine, diisopropylamine, ethylmethylamine, diethylamine, methylpropylamine, isopropylmethylamine, diisopropylamine, butylmethylamine, isobutylmethylamine, isopentylmethylamine, dibutylamine and diamylamine; monools such as ethanol, propanol, butanol, isopropanol, allyl alcohol and cyclopentanol; and monoisocyanates such as phenyl isocyanate.

When compound (a), compound (b) and nitrogen-containing aromatic compound (c) are added to the polyurethane solution, the aforementioned pigments or agents such as light resistant agents and antioxidants can be added at the same time.

Then, the polyurethane elastic yarn of the present invention is obtained by spinning such a polyurethane spinning solution.

In the present invention, the fineness, number of individual strands and cross-sectional shape of the polyurethane elastic yarn are not particularly restricted. For example, the yarn can be a monofilament constructed of an individual strand, or it can be a multifilament constructed of multiple individual strands. The cross-sectional shape of the yarn can be round or flat.

The solution spinning method is also not particularly restricted. Any method can be used, but dry spinning is preferred from the viewpoint that a yarn having a flat surface, high ductility, high recoverability and high heat resistance is obtained.

Also, the residual strain rate (that is, setting ability) and stress relaxation rate of the polyurethane elastic yarn are easily affected by the conditions in the spinning process, particularly the speed ratio of the godet roller and winder. Therefore, it is preferred that this speed ratio is appropriately determined according to the purpose of use of the yarn.

That is, from the viewpoint of obtaining polyurethane yarn which has the desired residual strain rate and stress relaxation rate, it is preferred that winding is performed with a speed ratio of the godet roller and winder in the range of 1.15 to 1.65. Further, to obtain polyurethane yarn which has a particularly low residual strain rate and low stress relaxation rate, the speed ratio of the godet roller and winder is preferably in the range of 1.15 to 1.4, more preferably 1.15 to 1.35. On the other hand, to obtain polyurethane elastic yarn which has a particularly high residual strain rate and high stress relaxation rate, the speed ratio of the godet roller and winder is preferably in the range of 1.25 to 1.65, more preferably 1.35 to 1.65.

In addition, by increasing the spinning speed, it is possible to improve the strength of the polyurethane elastic yarn. Therefore, it is preferred that a spinning speed of at least 450 m/minute is used in order to meet strength levels suitable for practical use. Further, taking industrial production into consideration, a spinning speed of about 450 to 1000 m/minute is preferred.

Examples

The present invention is explained in further detail by means of examples.

The measurement methods of fracture strength, fracture ductility, residual strain rate, stress relaxation rate, heat resistance during dyeing, quality of appearance, which indicates general heat resistance, and heat softening point in the present invention are explained.

[Residual strain rate, stress relaxation rate, fracture strength, fracture ductility]

The residual strain rate, stress relaxation rate , fracture strength and fracture ductility of the polyurethane elastic yarn were measured by tensile tests using an Instron model 5564 tensile testing machine.

A sample 5 cm long (L1) was stretched 300% at a pulling speed of 50 cm/minute five times repeatedly, and the stress when stretched 300% for the fifth time was taken as G1. Then, the length of the sample was held for 30 seconds in the 300% stretched state. The stress after being held for 30 seconds was taken as G2. Then, the length of the sample when the sample length was allowed to recover and stress returned to 0 was taken as L2. The operation of stretching 300%, holding and recovering was repeated, and when stretched for the sixth time, the sample was stretched until fracture. The stress at fracture was taken as G3, and the sample length at fracture was taken as L3. The aforementioned characteristics are calculated by the equations below.

$$\text{Fracture strength (cN)} = G3$$

$$\text{Stress relaxation rate (\%)} = 100 \times (G1 - G2)/G1$$

$$\text{Residual strain rate (\%)} = 100 \times (L2 - L1)/L1$$

$$\text{Fracture ductility (\%)} = 100 \times (L3 - L1)/L1$$

[Heat resistance 1 during dyeing (resistance in state where unsaturated fatty acids and heavy metals are attached in nylon blended fabric when dyeing temperature is relatively low)]

Two-way half tricot having 11 wales per inch (11/2.54 cm) and 25 courses per inch (25/2.54 cm), made from 85 wt% nylon filament (24 decitex, 7 filaments) made by Toray and 15 wt% polyurethane elastic yarn (20 decitex), was produced by ordinary knitting methods, making a raw knit fabric.

The obtained raw knit fabric was preset at 170°C for 60 seconds while stretched 3%, and it was coated with 0.1 ml of chemical agent 1, and then continuously (at about the same time or within 1 minute after), it was coated with 0.1 ml of chemical agent 2, after which it was dry heat treated (dry heat treated for 60 seconds at 175°C, then temporarily taken out and allowed to cool to room temperature, then dry heat treated for 60 seconds at 180°C). Then, it was stretched a maximum of 20% alternately in the horizontal and vertical directions twice per second using a bend tester. Mineral oil-based spinning oil for nylon, containing 1% oleic acid, was used as chemical agent 1. As chemical agent 2, copper acetate aqueous solution (copper concentration 100 ppm) was used. The fact that knitting machine oil (with metal components mixed in) and nylon spinning oil were attached in trace amounts to the raw knit fabric to which chemical agent 1 and chemical agent 2 were attached in this way was seen again in the nylon-based stretch raw knit fabric at the stage before dyeing. The amount of chemical agent 1 was 3.0 mg, and the amount of chemical agent 2 was 3.0 mg, with respect to 0.9 g of raw knit fabric.

The obtained stretch fabric was dyed by ordinary methods. That is, it was dyed by jet dyeing at 98°C with 1.0 owf dye solution of Kayanol Milling Blue 2RW (made by Nippon Kayaku).

The degree of damage to the polyurethane structure in the obtained dyed stretch fabric was observed with the naked eye or under magnification, and judged based on the following standards. Furthermore, judgment was performed by five people, and the most frequent (the judgment seen most often) was used. If the judgments were two-two-one, it was judged as "Δ".

A: No damage

B: Indentations and depressions in the base fabric were seen, and embrittlement of the polyurethane elastic yarn was seen under magnification

C: There were holes in the fabric

[Heat resistance 2 during dyeing (resistance to repeated dyeing in nylon blended fabric when dyeing temperature is relatively low)]

To evaluate resistance to thermal aging when the polyurethane yarn was dyed at high temperature, a test was conducted by high-temperature liquid treatment of polyurethane yarn by the method described below. Fracture strength of the polyurethane yarn was measured before and after this high-temperature liquid treatment, and its retention rate was calculated.

The polyurethane yarn was affixed while stretched 100%, and presetting was performed (170°C, 60 seconds). Then, it was left in the unstretched state for 24 hours at room temperature, and fracture strength G3 was measured by the same method as above. Also, after presetting, while it was in the affixed state, it was sealed in a pressure container containing 98°C hot water, and this hot liquid treatment was performed three times, where one set consisted of 60 minutes at 98°C. In this case, after the first hot liquid treatment and after the second hot liquid treatment, the next hot liquid treatment was performed after the sample was temporarily removed from the pressure container and left to cool to room temperature. After the third hot liquid treatment, the polyurethane yarn was removed from the pressure container, and was left at room temperature for 24 hours in the unstretched state, and fracture strength G5 was measured by the same method as above. The proportion of fracture strength G5 of the yarn after three hot liquid treatments with respect to the fracture strength G3 of the yarn which had only been preset was calculated (fracture strength retention rate), and this was used as the index of heat resistance 2.

$$\text{Fracture strength retention rate (\%)} = 100 \times G5/G3$$

[Heat resistance 3 during dyeing (resistance in state where unsaturated fatty acids and heavy metals are attached in polyester blended fabric when dyeing temperature is relatively high)]

Two-way half tricot having 13 wales per inch (13/2.54 cm) and 30 courses per inch (30/2.54 cm), made from 82 wt% polyethylene terephthalate filament (33 decitex, 48 filaments) made by Toray and 18 wt% polyurethane elastic yarn (22 decitex), was produced by ordinary knitting methods, making a raw knit fabric.

The obtained raw knit fabric was preset at 190°C for 60 seconds while stretched 3%, and it was coated with 0.1 ml of chemical agent 1, and then continuously (at about the same time or within 1 minute after), it was coated with 0.1 ml of chemical agent 2, after which it was dry heat treated (dry heat treated for 60 seconds at 195°C, then temporarily taken out and allowed to cool to room temperature, then dry heat treated for 60 seconds at 200°C). Then, it was stretched a maximum of 20% alternately in the horizontal and vertical directions twice per second using a bend tester. Mineral oil-based spinning oil for polyester, containing 1% oleic acid, was used as chemical agent 1. As chemical agent 2, copper acetate aqueous solution (copper concentration 100 ppm) was used. The fact that knitting machine oil (with metal components mixed in) and polyester spinning oil were attached in trace amounts to the raw knit fabric to which chemical agent 1 and chemical agent 2 were attached in this way was seen again in the polyester-based stretch raw knit fabric at the stage before dyeing. The amount of chemical agent 1 was 3.0 mg, and the amount of chemical agent 2 was 3.0 mg, with respect to 1.0 g of raw knit fabric.

The obtained stretch fabric was dyed by ordinary methods. That is, it was dyed for 60 seconds at 125°C by a dye solution containing 4% owf high-energy dispersant dye Dianix Black HG-FS conc (made by DyStar) and 1% owf POE alkyl amine ether-type sulfate Newbon WS (leveling agent made by Nicca Chemical), which was adjusted to pH 5 by acetic acid and sodium acetate buffer solution.

Then, reduction cleaning was performed for 20 minutes at 70°C in a treatment bath containing 2 g/liter hydrosulfite, 2 g/liter anionic surfactant Senkanol CW (soaping agent made by SENKA Corporation) and 1 g/liter sodium hydroxide.

The degree of damage to the polyurethane structure in the obtained dyed stretch fabric was observed with the naked eye or under magnification, and judged based on the following standards. Furthermore, judgment was performed by five people, and the most frequent (the judgment seen most often) was used. If the judgments were two-two-one, it was judged as "Δ".

A: No damage

B: Indentations and depressions in the base fabric were seen, and embrittlement of the polyurethane elastic yarn was seen under magnification

C: There were holes in the fabric

[Heat resistance 4 during dyeing (resistance to repeated dyeing in polyester blended fabric when dyeing temperature is relatively high)]

To evaluate resistance to thermal aging when polyurethane yarn was dyed at high temperature, a test was conducted by high-temperature liquid treatment of polyurethane yarn by the method described below. Fracture strength of the polyurethane yarn was measured before and after this high-temperature liquid treatment, and its retention rate was calculated.

The polyurethane yarn was affixed while stretched 100%, and presetting was performed (190°C, 60 seconds). Then, it was left in the unstretched state for 24 hours at room temperature, and fracture strength G3 was measured by the same method as above. Also, after presetting, while it was in the affixed state, it was sealed in a pressure container containing 130°C hot water, and this hot liquid treatment was performed three times, where one set consisted of 60 minutes at 130°C. In this case, after the first hot liquid treatment and after the second hot liquid treatment, the next hot liquid treatment was performed after the sample was temporarily removed from the pressure container and left to cool to room temperature. After the third hot liquid treatment, the polyurethane yarn was removed from the pressure container, and was left at room temperature for 24 hours in the unstretched state, and fracture strength G5 was measured by the same method as above. The proportion of fracture strength G5 of the yarn after three hot liquid treatments with respect to the fracture strength G3 of the yarn which had only been preset was calculated (fracture strength retention rate), and this was used as the index of heat resistance 4.

$$\text{Fracture strength retention rate (\%)} = 100 \times G5/G3$$

[Quality of appearance]

Dyed stretch fabric was produced in the same way as in the test of heat resistance 1 during dyeing and the test of heat resistance 3 during dyeing described above, except that coating with chemical agent 1 and chemical agent 2 was not performed, and the bend test was not performed. That is, after the raw knit fabric was made, it was made into a dyed stretch fabric by presetting, dry heat treatment and dyeing. The appearance of the base fabric of the obtained dyed stretch fabric (cloth approximately 20 m long and 1.8 m wide) was inspected with the naked eye, and the polyester structure was observed under magnification, and these were judged according to the following standards. Furthermore, judgment was performed by five people, and the most frequent (the judgment seen most often) was used. If the judgments were two-two-one, it was judged as "Δ".

A: Structure is homogenous, without billowing or striped defects

B: Partial billowing or striped defects, less than one per 20 m

C: Billowing or striped defects, more than one per 20 m

[Heat softening point]

Heat softening point was measured as an index of the thermal setting ability of the polyurethane yarn. The temperature distribution of dynamic storage modulus E' of the polyurethane yarn was measured at a heating rate of 10°C/minute, using a dynamic storage modulus measurement machine model RSA II made by Rheometrics. The heat softening point was determined from the intersection between the tangent of the E' curve in the region between 80°C and 130°C and the tangent of the E' curve produced when E' was reduced by softening at 160°C and above. Furthermore, E' was on a logarithmic axis, and temperature was on a linear axis.

[Contained amounts of each compound]

One gram of yarn sample was prepared, and this was put in a Soxhlet extractor using dichloromethane as a solvent. Extraction was performed for at least 60 minutes, and the extract was temporarily dried and solidified. Then, extraction was similarly performed with methanol, and each compound was isolated by high-performance liquid chromatography. The structure was determined by a method such as 1 HNMR, and each compound which had been isolated and structurally identified was calibrated by HPLC, and the content ratios were determined by the following formula.

Content ratio (wt%) = (sample peak area / calibration peak area) x (calibration sample weight / yarn sample weight)

[Example 1]

Polymerization was performed by ordinary methods from PTMG of molecular weight 2900, MDI and ethylene glycol, and a 35 wt% DMAc solution of the polyurethane polymer was prepared. This was used as polymer solution A1.
Then, as hindered phenol compound (a), N,N-dialkyl semicarbazide compound (b) and nitrogen-containing aromatic compound (c), compound (a1), which is 1,3,5-tris(4-t-butyl-3-hydroxy-2,6-dimethylbenzyl)-1,3,5-triazine-2,4,6 (1H,3H,5H)-trione, compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine (molecular weight 509, Cyasorb™ UV-1164 made by Cytec Industries) were compounded in the proportion of 2.0:3.0:0.1, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B1.
Then, 94.9 wt% of polymer solution A1 and 5.1 wt% of additive solution B1 were uniformly mixed, thereby making spinning solution D1.
This spinning solution D1 was dry-spun and wound at a spinning speed of 540 m/minute and a speed ratio of the godet roller and winder of 1.40, thereby producing 20 decitex monofilament polyurethane elastic yarn (200 g spool). The content (wt%) of each component constituting the obtained polyurethane elastic yarn was as shown in Table 1. Compound (a), compound (b) and nitrogen-containing aromatic compound (c) were contained in the amounts of 2.0 wt%, 3.0 wt% and 0.1 wt%, respectively.
The fracture ductility, fracture strength, residual strain rate, stress relaxation rate and heat softening point of this polyurethane yarn were measured, and are shown in Table 2.
Two-way half tricot having 11 wales per inch and 25 courses per inch, made from 85 wt% nylon filament (24 decitex, 7 filaments) made by Toray and 15 wt% of the obtained polyurethane elastic yarn (20 decitex) was produced by ordinary knitting methods, making a raw knit fabric (nylon-based stretch fabric). Heat resistance 1 to dyeing when unsaturated fatty acids and heavy metals were attached was evaluated. Also, quality of appearance was evaluated after this raw knit fabric was dyed.
In addition, heat resistance 2 to repeated dyeing was tested using the obtained polyurethane elastic yarn.
The fracture ductility, fracture strength, residual strain rate, stress relaxation rate and heat softening point, which is an index of thermal setting ability, of this polyurethane yarn were the same as in comparative example 1 (described below) in which compound (b) and compound (c) were not compounded, and there were no adverse effects on processability or base fabric characteristics due to the compounding of these additives.
Also, as for the heat resistance during dyeing of the nylon-based stretch fabric, both heat resistance 1 during dyeing (resistance to unsaturated fatty acids and heavy metals) and heat resistance 2 during dyeing (resistance to repeated dyeing) were greatly improved over comparative example 1.
In addition, the obtained dyed stretch fabric had an excellent quality of appearance without flaws.

[Example 2]

As compound (a), compound (b) and nitrogen-containing aromatic compound (c), compound (a1), which is 1,3,5-tris(4-t-butyl-3-hydroxy-2,6-dimethylbenzyl)-1,3,5-triazine-2,4,6(1 H,3H,5H)-trione, compound (a2), which is an addition polymer of divinylbenzene and p-cresol (Methacrol™ 2390 made by DuPont), compound (b1), which is the polymer in which dimethyl semicarbazide is formed, by reacting UDMH, at a terminal in an adduct having 6 to 8 repetitions of TBDEA and PICM used in example 1, and compound (c1), which is the 2,4-di(2',4'-dimethylphenyl)-6-(2"-hydroxy-4"-alkoxyphenyl)-1,3,5-triazine used in example 1, were compounded in the proportion of 1.0:1.0:3.0:0.15, and a 35

wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B2.

Then, 94.85 wt% of polymer solution A1 prepared in example 1 and 5.15 wt% of additive solution B2 described above were uniformly mixed, thereby making spinning solution D2.

This spinning solution D2 was dry-spun and wound at a spinning speed of 540 m/minute and a speed ratio of the godet roller and winder of 1.40, thereby producing 20 decitex monofilament polyurethane elastic yarn (200 g spool). The content (wt%) of each component constituting the obtained polyurethane elastic yarn was as shown in Table 1. Compound (a), compound (b) and nitrogen-containing aromatic compound (c) were contained in the amounts of 2.0 wt%, 3.0 wt% and 0.15 wt%, respectively.

The same two-way half tricot as in example 1, made from the obtained polyurethane elastic yarn (20 decitex) and nylon filament (24 decitex, 7 filaments) made by Toray, was produced by ordinary knitting methods, making a raw knit fabric (nylon-based stretch fabric). Heat resistance 1 to dyeing when unsaturated fatty acids and heavy metals were attached was evaluated. Also, quality of appearance was evaluated after this raw knit fabric was dyed.

In addition, heat resistance 2 to repeated dyeing was tested using the obtained polyurethane elastic yarn.

The fracture ductility, fracture strength, residual strain rate, stress relaxation rate and heat softening, point which is an index of thermal setting ability, of this polyurethane yarn were the same as in comparative example 1 (described below) in which compound (b) and compound (c) were not compounded, and there were no adverse effects on processability or base fabric characteristics due to the compounding of these additives.

Also, as for the heat resistance during dyeing of the nylon-based stretch fabric, both heat resistance 1 during dyeing (resistance to unsaturated fatty acids and heavy metals) and heat resistance 2 during dyeing (resistance to repeated dyeing) were greatly improved over comparative example 1.

In addition, the obtained dyed stretch fabric had an excellent quality of appearance without flaws.

[Example 3]

Polymerization of PTMG of molecular weight 1800, MDI, ethylene diamine and diethylamine as a terminal blocking agent was performed by ordinary methods, and a 35 wt% DMAc solution of polyurethane urea polymer was prepared. This was used as polymer solution A2.

As compound (a), compound (b) and nitrogen-containing aromatic compound (c), compound (a1), which is 1,3,5-tris(4-t-butyl-3-hydroxy-2,6-dimethylbenzyl)-1,3,5-triazine-2,4,6(1H,3H,5H)-trione, compound (a2), which is an addition polymer of divinylbenzene and p-cresol (Methacrol™ 2390 made by DuPont), compound (b1), which is the polymer in which dimethyl semicarbazide is formed, by reacting UDMH, at a terminal in an adduct having 6 to 8 repetitions of TBDEA and PICM used in example 1, and compound (c1), which is 2,4-di(2',4'-dimethylphenyl)-6-(2"-hydroxy-4"-alkoxyphenyl)-1,3,5-triazine, were compounded in the proportion of 1.0:1.0:3.0:0.10, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B3.

Then, 94.9 wt% of polymer solution A2 and 5.1 wt% of additive solution B3 were uniformly mixed, thereby making spinning solution D3. This spinning solution D3 was dry-spun and wound at a spinning speed of 600 m/minute and a speed ratio of the godet roller and winder of 1.20, thereby producing 22 decitex 2-filament polyurethane elastic yarn (500 g spool). The content (wt%) of each component constituting the obtained polyurethane elastic yarn was as shown in Table 1. Compound (a), compound (b) and nitrogen-containing aromatic compound (c) were contained in the amounts of 2.0 wt%, 3.0 wt% and 0.1 wt%, respectively.

Two-way half tricot having 13 wales per inch and 30 courses per inch, made from 82 wt% of the obtained polyurethane elastic yarn (22 decitex) and 18 wt% polyethylene terephthalate filament (33 decitex, 48 filaments) made by Toray, was produced by ordinary knitting methods, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) and so forth were not compounded, and there were no adverse effects on processability or base fabric characteristics due to the compounding of these additives.

Also, as for the heat resistance during dyeing of the nylon-based stretch fabric, both heat resistance 3 during dyeing (resistance to unsaturated fatty acids and heavy metals) and heat resistance 4 during dyeing (resistance to repeated dyeing) were greatly improved over comparative example 2.

In addition, the obtained dyed stretch fabric had an excellent quality of appearance without flaws.

[Example 4]

As compound (a), compound (b) and nitrogen-containing aromatic compound (c), compound (a2), which is the addition polymer of divinylbenzene and p-cresol (Methacrol™ 2390 made by DuPont) used in example 2, compound (a3), which is triethylene glycol-bis[3-(3-t-butyl-5-methyl-4-hydroxyphenyl)propionate], compound (b1), which is the polymer in which dimethyl semicarbazide is formed, by reacting UDMH, at a terminal in an adduct having 6 to 8 repetitions of TBDEA and PICM used in example 1, compound (b2), which is 4,4'-(methlenedi-p-phenylene)bis(N,N-dimethyl semicarbazide), and compound (c1), which is 2,4-di(2',4'-dimethylphenyl)-6-(2"-hydroxy-4"-alkoxyphenyl)-1,3,5-triazine, were compounded in the proportion of 1.0:1.0:2.0:0.5:0.1, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B4.

Then, 95.4 wt% of polymer solution A2 prepared in example 3 and 4.6 wt% of additive solution B4 described above were uniformly mixed, thereby making spinning solution D4.

This spinning solution D4 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 1. Compound (a), compound (b) and nitrogen-containing aromatic compound (c) were contained in the amounts of 2.0 wt%, 2.5 wt% and 0.1 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. In addition, the obtained dyed stretch fabric had an excellent quality of appearance without flaws.

[Example 5]

As compound (a), compound (b) and nitrogen-containing aromatic compound (c), compound (a2), which is the addition polymer of divinylbenzene and p-cresol (Methacrol™ 2390 made by DuPont) used in example 2, compound (a3), which is triethylene glycol-bis[3-(3-t-butyl-5-methyl-4-hydroxyphenyl)propionate], compound (a4), which is ethylene-1,2-bis(3,3'bis[3-t-butyl-4-hydroxyphenyl]butyrate), compound (b2), which is the 4,4'-(methlenedi-p-phenylene)bis (N,N-dimethyl semicarbazide) used in example 4, and compound (c1), which is 2,4-di(2',4'-dimethylphenyl)-6-(2"-hydroxy-4"-alkoxyphenyl)-1,3,5-triazine, were compounded in the proportion of 1.0:1.0:1.0:1.5:0.1, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B5. In addition, other than the above, a 35 wt% DMAc solution of polyurethane produced by a reaction of t-butyldiethanolamine and methylene-bis-(4-cyclohexyl isocyanate) (Methacrol™ 2462 made by DuPont) as a stabilizer was used as other additive solution Z1 (35 wt%).

Then, 93.4 wt% of polymer solution A2 prepared in example 3, 4.6 wt% of additive solution B5 described above and 2.0 wt% of other additive solution Z1 were uniformly mixed, thereby making spinning solution D5.

This spinning solution D5 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 1. Compound (a), compound (b) and nitrogen-containing aromatic compound (c) were contained in the amounts of 3.0 wt%, 1.5 wt% and 0.1 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2.

In addition, the obtained dyed stretch fabric had an excellent quality of appearance without flaws.

[Example 6]

As compound (a), compound (b) and nitrogen-containing aromatic compound (c), compound (a2), which is the addition polymer of divinylbenzene and p-cresol (Methacrol™ 2390 made by DuPont) used in example 2, compound (a3), which is triethylene glycol-bis[3-(3-t-butyl-5-methyl-4-hydroxyphenyl)propionate] and compound (a4), which is ethylene-1,2-bis(3,3-bis[3-t-butyl-4-hydroxyphenyl]butyrate), compound (b1), which is the polymer in which dimethyl semicarbazide is formed, by reacting UDMH, at a terminal in an adduct having 6 to 8 repetitions of TBDEA and PICM used in example 1, compound (b2), which is the 4,4'-(methlenedi-p-phenylene)bis(N,N-dimethyl semicarbazide) used in example 4, and compound (c1), which is 2,4-di(2',4'-dimethylphenyl)-6-(2"-hydroxy-4"-alkoxyphenyl)-1,3,5-triazine, were compounded in the proportion of 1.0:2.0:0.5:2.0:0.5:0.1, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B6.

Then, 93.9 wt% of polymer solution A2 prepared in example 3 and 6.1 wt% of additive solution B6 described above were uniformly mixed, thereby making spinning solution D6.

This spinning solution D6 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 1. Compound (a), compound (b) and nitrogen-containing aromatic compound (c) were contained in the amounts of 3.5 wt%, 2.5 wt% and 0.1 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2.

In addition, the obtained dyed stretch fabric had an excellent quality of appearance without flaws.

[Example 7]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine, were compounded in the proportion of 1.0:1.0:3.0:0.05, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B7.

Then, 94.95 wt% of polymer solution A2 prepared in example 3 and 5.05 wt% of additive solution B7 described above were uniformly mixed, thereby making spinning solution D7.

This spinning solution D7 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 1. Compound (a), compound (b) and nitrogen-containing aromatic compound (c) were contained in the amounts of 2.0 wt%, 3.0 wt% and 0.05 wt%, respectively.
The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.
In addition, heat resistance 4 to repeated dyeing was tested using the obtained polyurethane elastic yarn.
The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.
Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. However, heat resistance 4 was somewhat worse than in example 3, in which only the added amount of compound (c1) differed while all of the additives and their added amounts other than the nitrogen-containing aromatic compound (c) were the same. In addition, the obtained dyed stretch fabric had an excellent quality of appearance without flaws.

[Example 8]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine, were compounded in the proportion of 1.0:1.0:3.0:0.15, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B8.
Then, 94.85 wt% of polymer solution A2 prepared in example 3 and 5.15 wt% of additive solution B8 described above were uniformly mixed, thereby making spinning solution D8.
This spinning solution D8 was dry-spun and wound at a spinning speed of 600 m/minute and a speed ratio of the godet roller and winder of 1.20, thereby producing 22 decitex 2-filament polyurethane elastic yarn (500 g spool).
The content (wt%) of each component constituting the obtained polyurethane elastic yarn was as shown in Table 3. Compound (a), compound (b) and nitrogen-containing aromatic compound (c) were contained in the amounts of 2.0 wt%, 3.0 wt% and 0.15 wt%, respectively.
The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.
In addition, heat resistance 4 to repeated dyeing was tested using the obtained polyurethane elastic yarn.
The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.
Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. In addition, the obtained dyed stretch fabric had an excellent quality of appearance without flaws.

[Example 9]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine, were compounded in the proportion of 1.0:1.0:3.0:0.20, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B9.

Then, 94.80 wt% of polymer solution A2 prepared in example 3 and 5.20 wt% of additive solution B9 described above were uniformly mixed, thereby making spinning solution D9.

This spinning solution D9 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 3. Compound (a), compound (b) and nitrogen-containing aromatic compound (c) were contained in the amounts of 2.0 wt%, 3.0 wt% and 0.20 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. However, heat resistance 3 and heat resistance 4 were somewhat worse than in example 3, in which only the added amount of compound (c1) differed while all of the additives and their added amounts other than the nitrogen-containing aromatic compound (c) were the same. In addition, the obtained dyed stretch fabric had an excellent quality of appearance without flaws.

[Example 10]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine, were compounded in the proportion of 1.0:1.0:3.0:0.25, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B10.

Then, 94.75 wt% of polymer solution A2 prepared in example 3 and 5.25 wt% of additive solution B10 described above were uniformly mixed, thereby making spinning solution D10.

This spinning solution D10 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 3. Compound (a), compound (b) and nitrogen-containing aromatic compound (c) were contained in the amounts of 2.0 wt%, 3.0 wt% and 0.25 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. However, heat resistance 3 and heat resistance 4 were somewhat worse than in example 3, in which only the added amount of compound (c1) differed while all of the

additives and their added amounts other than the nitrogen-containing aromatic compound (c) were the same. In addition, the obtained dyed stretch fabric had an excellent quality of appearance without flaws.

[Example 11]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine, were compounded in the proportion of 1.0:1.0:3.0:0.30, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B11.

Then, 94.70 wt% of polymer solution A2 prepared in example 3 and 5.30 wt% of additive solution B11 described above were uniformly mixed, thereby making spinning solution D11.

This spinning solution D11 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 3. Compound (a), compound (b) and nitrogen-containing aromatic compound (c) were contained in the amounts of 2.0 wt%, 3.0 wt% and 0.30 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. In addition, the obtained dyed stretch fabric had an excellent quality of appearance without flaws.

[Example 12]

As compound (a), compound (b) and nitrogen-containing aromatic compound (c), compound (a3), which is the triethylene glycol-bis[3-(3-t-butyl-5-methyl-4-hydroxyphenyl)propionate] used in example 4, compound (b1), which is the polymer in which dimethyl semicarbazide is formed, by reacting UDMH, at a terminal in an adduct having 6 to 8 repetitions of TBDEA and PICM used in example 3, and compound (c1), which is 2,4-di(2',4'-dimethylphenyl)-6-(2"-hydroxy-4"-alkoxyphenyl)-1,3,5-triazine, were compounded in the proportion of 2.0:3.0:0.1, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B12.

Then, 94.9 wt% of polymer solution A2 prepared in example 3 and 5.1 wt% of additive solution B12 described above were uniformly mixed, thereby making spinning solution D12.

This spinning solution D12 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 3. Compound (a), compound (b) and nitrogen-containing aromatic compound (c) were contained in the amounts of 2.0 wt%, 3.0 wt% and 0.1 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point,

which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. In addition, the obtained dyed stretch fabric had an excellent quality of appearance without flaws.

[Example 13]

As compound (a), compound (b) and nitrogen-containing aromatic compound (c), compound (a4), which is the ethylene-1 ,2-bis(3,3'bis[3-t-butyl-4-hydroxyphenyl]butyrate) used in example 5, compound (b1), which is the polymer in which dimethyl semicarbazide is formed, by reacting UDMH, at a terminal in an adduct having 6 to 8 repetitions of TBDEA and PICM used in example 3, and compound (c1), which is 2,4-di(2',4'-dimethylphenyl)-6-(2"-hydroxy-4"-alkoxyphenyl)-1,3,5-triazine, were compounded in the proportion of 2.0:3.0:0.1, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B13.

Then, 94.9 wt% of polymer solution A2 prepared in example 3 and 5.1 wt% of additive solution B13 described above were uniformly mixed, thereby making spinning solution D13.

This spinning solution D13 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 3. Compound (a), compound (b) and nitrogen-containing aromatic compound (c) were contained in the amounts of 2.0 wt%, 3.0 wt% and 0.1 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. In addition, the obtained dyed stretch fabric had an excellent quality of appearance without flaws.

[Example 14]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is the polymer in which dimethyl semicarbazide is formed, by reacting UDMH, at a terminal in an adduct having 6 to 8 repetitions of TBDEA and PICM used in example 1, and compound (c2), which is 2[2'-hydroxy-3',5'-bis($\alpha$,$\alpha$-methylbenzyl)phenyl]benzotriazole (Tinuvin™ 234 made by Ciga-Geigy, molecular weight 448), were compounded in the proportion of 1.0:1.0:3.0:0.1, and a 35 wt% DMAc solution thereof was prepared. In preparing this solution, a horizontal mill DYNO-MILL KDL made by Willy A. Bachofen AG was filled with 85% zirconia beads, and the components were uniformly dissolved in DMAc at a flow rate of 50 g/minute. This solution was used as additive solution B14.

Then, 94.9 wt% of polymer solution A2 prepared in example 3 and 5.1 wt% of additive solution B14 described above were uniformly mixed, thereby making spinning solution D14.

This spinning solution D14 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 3. Compound (a), compound (b) and nitrogen-containing aromatic compound (c) were contained in the amounts of 2.0 wt%, 3.0 wt% and 0.1 wt%, respectively.

The same two-way half tricot as in example 3, made from the obtained polyurethane elastic yarn (22 decitex)

and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were greatly improved over comparative example 2. However, heat resistance 4 was somewhat worse than in example 3, in which only the type of compound (c) differed while all of the additives and their added amounts other than the nitrogen-containing aromatic compound (c) were the same. In addition, the obtained dyed stretch fabric had an excellent quality of appearance without flaws.

[Examples 15 to 20]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine, were used to create spinning solutions by the same methods as in example 3, so as to result in 0.03 wt% to 1.0 wt% of compound (a1) and 0.03 wt% to 6.0 wt% of compound (a2) - that is, a total of 0.06 wt% to 7.0 wt% of compound (a). From these, 22 decitex 2-filament polyurethane elastic yarn (500 g spool) was produced by the same methods as in example 3.

The content (wt%) of each component constituting the obtained polyurethane elastic yarn was as shown in Table 5. Compound (a), compound (b) and nitrogen-containing aromatic compound (c) were contained in the amounts of 0.06 to 7.0 wt%, 3.0 wt% and 0.10 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were improved over comparative example 2, and over comparative example 5 (described below) in which compound (a) was not compounded. However, heat resistance 3 and heat resistance 4 of example 15 and example 16, in which the contained amount of compound (a) was 0.06 wt% and 0.12 wt%, respectively, while all of the other additives and their added amounts were the same, were somewhat worse than in example 3. In addition, the obtained dyed stretch fabric generally had an excellent quality of appearance. However, the quality of appearance of example 15, in which the contained amount of compound (a) was 0.06 wt%, and of examples 19 and 20, in which the contained amount of compound (a) was at least 6 wt%, were somewhat worse than in example 3.

[Examples 21 to 26]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), compound (b1), which is a polymer in which dimethyl semicarbazide is formed, by reacting UDMH, at a terminal in an adduct having 6 to 8 repetitions of TBDEA and PICM, and compound (c1), which is 2,4-di(2',4'-dimethylphenyl)-6-(2"-hydroxy-4"-alkoxyphenyl)-1,3,5-triazine, were used to create spinning solutions by the same methods as in example 3, with the compositions shown in Table 7, so as to result in 0.06 wt% to 7.0 wt% of compound (b). From these, 22 decitex 2-filament polyurethane elastic yarn (500 g spool) was produced by the same methods as in example 3.

The content (wt%) of each component constituting the obtained polyurethane elastic yarn was as shown in Table 7. Compound (a), compound (b) and nitrogen-containing aromatic compound (c) were contained in the amounts of 2.0 wt%, 0.06 wt% to 7.0 wt% and 0.10 wt%, respectively.

The same two-way half tricot as in example 3, made from the obtained polyurethane elastic yarn (22 decitex) and polyester terephthalate filament (33 decitex, 48 filaments) made by Toray, was created, making a raw knit fabric (polyester-based stretch fabric). Heat resistance 3 to dyeing when unsaturated fatty acids and heavy metals were attached was evaluated. Also, quality of appearance was evaluated after this raw knit fabric was dyed.

In addition, heat resistance 4 to repeated dyeing was tested using the obtained polyurethane elastic yarn.

The fracture ductility, fracture strength, residual strain rate, stress relaxation rate and heat softening point, which is an index of thermal setting ability, of this polyurethane yarn were the same as in comparative example 2 (described below) in which compound (b) and compound (c) were not compounded, and there were no adverse effects on processability or base fabric characteristics due to the compounding of these additives.

Also, as for the heat resistance during dyeing of the polyester-based stretch fabric, both heat resistance 3 during dyeing (resistance to unsaturated fatty acids and heavy metals) and heat resistance 4 during dyeing (resistance to repeated dyeing) were improved over comparative example 2, and over comparative example 6 (described below) in which compound (b) was not compounded. However, heat resistance 3 and heat resistance 4 of example 21 and example 22, in which the contained amount of compound (b) was 0.06 wt% and 0.12 wt%, respectively, while all of the other additives and their added amounts were the same, were somewhat worse than in example 3. In addition, the obtained dyed stretch fabric generally had an excellent quality of appearance. However, the quality of appearance of examples 25 and 26, in which the contained amount of compound (b) was at least 6.0 wt% while all of the other additives and their added amounts were the same, was somewhat worse than in example 3.

[Comparative example 1]

Polymer solution A1 prepared in example 1, solution B3, which is a 35 wt% DMAc solution of compound (a2), which is an addition polymer of divinylbenzene and p-cresol (Methacrol™ 2390 made by DuPont), used in example 2, and other additive solution Z1 prepared in example 5 were uniformly mixed in proportions of 96.5 wt%, 1.5 wt% and 2.0 wt%, respectively, thereby making spinning solution E1. This spinning solution E1 was dry-spun and wound at a spinning speed of 540 m/minute and a speed ratio of the godet roller and winder of 1.40, thereby producing 20 decitex monofilament polyurethane elastic yarn (500 g spool).

The content (wt%) of each component constituting the obtained polyurethane elastic yarn was as shown in Table 9. Compound (a) was contained in the amount of 1.5 wt%.

The fracture ductility, fracture strength, residual strain rate, stress relaxation rate and heat softening point of this polyurethane yarn were measured, and are shown in Table 10.

A nylon-based stretch fabric was produced in the same way as in example 1 using the obtained polyurethane elastic yarn, making a raw knit fabric. Heat resistance 1 to dyeing when unsaturated fatty acids and heavy metals were attached was evaluated. The results were much worse than in examples 1 and 2.

Also, when quality of appearance was evaluated after this raw knit fabric was dyed, partial billowing caused by fatigue of the polyurethane yarn due to its various processing history occurred in more than 200 locations per 20 m, and the product was unsatisfactory.

[Comparative example 2]

Polymer solution A2 prepared in example 3, solution B3, which is a 35 wt% DMAc solution of compound (a2), which is an addition polymer of divinylbenzene and p-cresol (Methacrol™ 2390 made by DuPont), used in example 2, and other additive solution Z1 prepared in example 5 were uniformly mixed in proportions of 96.5 wt%, 1.5 wt% and 2.0 wt%, respectively, thereby making spinning solution E2. This spinning solution E2 was dry-spun and wound at a spinning speed of 600 m/minute and a speed ratio of the godet roller and winder of 1.20, thereby producing 22 decitex 2-filament polyurethane elastic yarn (500 g spool).

The content (wt%) of each component constituting the obtained polyurethane elastic yarn was as shown in Table 9. Compound (a) was contained in the amount of 1.5 wt%.

The fracture ductility, fracture strength, residual strain rate, stress relaxation rate and heat softening point of this polyurethane yarn were measured, and are shown in Table 10.

A polyester-based stretch fabric was produced in the same way as in example 3 using the obtained polyurethane elastic yarn, making a raw knit fabric. Heat resistance 3 to dyeing when unsaturated fatty acids and heavy metals were attached was evaluated. The results were much worse than in examples 3 and 4.

Also, when quality of appearance was evaluated after this raw knit fabric was dyed, partial billowing caused by fatigue of the polyurethane yarn due to its various processing history occurred in 66 locations per 20 m, and the

product was unsatisfactory.

[Comparative example 3]

As compound (a) and nitrogen-containing aromatic compound (c), compound (a2), which is the addition polymer of divinylbenzene and p-cresol (Methacrol™ 2390 made by DuPont) used in example 2, compound (a5), which is N,N-bis[3-(3,5-di-t-butyl-4-hydroxyphenyl)propionyl]hydrazine (IRGANOX™ MD1024 made by Ciba-Geigy), and compound (c2), which is 2[2'-hydroxy-3',5'-bis($\alpha$,$\alpha$-methylbenzyl)phenyl]benzotriazole (Tinuvin™ 234 made by Ciga-Geigy), were compounded in the proportion of 1.0:1.0:0.7, and a 35 wt% DMAc solution thereof was prepared. Preparation of this solution was performed in the same way as in example 1. This solution was used as additive solution F1.

Then, 95.3 wt% of polymer solution A2 prepared in example 3, 2.7 wt% of additive solution F1 described above and 2.0 wt% of other additive solution C1 [sic] prepared in example 5 were uniformly mixed, thereby making spinning solution E3.

This spinning solution E3 was dry-spun and wound at a spinning speed of 600 m/minute and a speed ratio of the godet roller and winder of 1.30, thereby producing 22 decitex 2-filament polyurethane elastic yarn (500 g spool).

The content (wt%) of each component constituting the obtained polyurethane elastic yarn was as shown in Table 9. Compound (a), compound (b) and nitrogen-containing aromatic compound (c) were contained in the amounts of 2.0 wt%, 0.0 wt% and 0.7 wt%, respectively. This polyurethane elastic yarn contained a relatively large amount of benzotriazole-based ultraviolet absorbent agent.

The fracture ductility, fracture strength, residual strain rate, stress relaxation rate and heat softening point of this polyurethane yarn are shown in Table 10.

A polyester-based stretch fabric was produced in the same way as in example 3 using the obtained polyurethane elastic yarn, making a raw knit fabric. Heat resistance 3 to dyeing when unsaturated fatty acids and heavy metals were attached was evaluated. The results were much worse than in examples 3 through 6.

Also, when quality of appearance was evaluated after this raw knit fabric was dyed, partial billowing caused by fatigue of the polyurethane yarn due to its various processing history occurred in 40 locations per 20 m, and the product was unsatisfactory.

[Comparative example 4]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 1, compound (a2), which is the addition polymer of divinylbenzene and p-cresol (Methacrol™ 2390 made by DuPont) used in example 2, compound (b1), which is the polymer in which dimethyl semicarbazide is formed, by reacting UDMH, at a terminal in an adduct having 6 to 8 repetitions of TBDEA and PICM used in example 1, and compound (c1), which is the 2,4-di(2',4'-dimethylphenyl)-6-(2"-hydroxy-4"-alkoxyphenyl)-1,3,5-triazine used in example 1, were compounded in the proportion of 1.0:1.0:3.0:0.8, and a 35 wt% DMAc solution thereof was prepared. Preparation of this solution was performed in the same way as in example 1. This solution was used as additive solution F2.

Then, 94.2 wt% of polymer solution A2 prepared in example 3 and 5.8 wt% of additive solution F2 described above were uniformly mixed, thereby making spinning solution E4.

This spinning solution E4 was dry-spun and wound at a spinning speed of 600 m/minute and a speed ratio of the godet roller and winder of 1.30, thereby producing 22 decitex 2-filament polyurethane elastic yarn (500 g spool).

The content (wt%) of each component constituting the obtained polyurethane elastic yarn was as shown in Table 9. Compound (a), compound (b) and nitrogen-containing aromatic compound (c) were contained in the amounts of 2.0 wt%, 3.0 wt% and 0.8 wt%, respectively. This polyurethane elastic yarn contained a relatively large amount of triazine-based ultraviolet absorbent agent.

The fracture ductility, fracture strength, residual strain rate, stress relaxation rate and heat softening point of this polyurethane yarn are shown in Table 10.

A polyester-based stretch fabric was produced in the same way as in example 3 using the obtained polyurethane elastic yarn, making a raw knit fabric. Heat resistance 3 to dyeing when unsaturated fatty acids and heavy metals were attached was evaluated. The results were much worse than in examples 3 through 6.

Also, when quality of appearance was evaluated after this raw knit fabric was dyed, partial billowing caused by fatigue of the polyurethane yarn due to its various processing history occurred in more than 100 locations per 20 m, and the product was unsatisfactory.

[Comparative example 5]

As compound (a), compound (b) and nitrogen-containing aromatic compound (c), compound (b1), which is the

polymer in which dimethyl semicarbazide is formed, by reacting UDMH, at a terminal in an adduct having 6 to 8 repetitions of TBDEA and PICM used in example 1, and compound (c1), which is 2,4-di(2',4'-dimethylphenyl)-6-(2''-hydroxy-4''-alkoxyphenyl)-1,3,5-triazine, were used to create spinning solutions by the same methods as in example 3, with the compositions shown in Table 9 - that is, without adding compound (a). From these, 22 decitex 2-filament polyurethane elastic yarn (500 g spool) was produced by the same methods as in example 3.

The content (wt%) of each component constituting the obtained polyurethane elastic yarn was as shown in Table 9. The fracture ductility, fracture strength, residual strain rate, stress relaxation rate and heat softening point of this polyurethane yarn were measured, and are shown in Table 10.

A polyester-based stretch fabric was produced in the same way as in example 3 using the obtained polyurethane elastic yarn, making a raw knit fabric. Heat resistance 3 to dyeing when unsaturated fatty acids and heavy metals were attached was evaluated. The results were much worse than in examples 15 through 20. Heat resistance 4 was also much worse, with the yarn breaking during repeated heat treatment.

Also, when quality of appearance was evaluated after this raw knit fabric was dyed, partial billowing caused by fatigue of the polyurethane yarn due to its various processing history occurred in more than 100 locations per 20 m, and the product was unsatisfactory.

[Comparative example 6]

As compound (a), compound (b) and nitrogen-containing aromatic compound (c), compound (a1), which is the 1,3,5-tris(4-t-butyl-3-hydroxy-2,6-dimethylbenzyl)-1,3,5-triazine-2,4,6(1H,3H,5H)-trione used in example 3, compound (a2), which is an addition polymer of divinylbenzene and p-cresol (Methacrol™ 2390 made by DuPont), and compound (c1), which is 2,4-di(2',4'-dimethylphenyl)-6-(2''-hydroxy-4''-alkoxyphenyl)-1,3,5-triazine, were used to create spinning solutions by the same methods as in example 3, with the compositions shown in Table 9. From these, 22 decitex 2-filament polyurethane elastic yarn (500 g spool) was produced by the same methods as in example 3.

The content (wt%) of each component constituting the obtained polyurethane elastic yarn was as shown in Table 9. The fracture ductility, fracture strength, residual strain rate, stress relaxation rate and heat softening point of this polyurethane yarn were measured, and are shown in Table 10.

A polyester-based stretch fabric was produced in the same way as in example 3 using the obtained polyurethane elastic yarn, making a raw knit fabric. Heat resistance 3 to dyeing when unsaturated fatty acids and heavy metals were attached was evaluated. The results were much worse than in example 3 and examples 21 through 26. Heat resistance 4 was also much worse.

In the tables, the numbers indicate the compounded proportion of 35 wt% DMAc solution prepared with each component.

TABLE 1

| | Polymer | | (a) Hindered Phenol Compound | | | | | (b) N,N-dialkyl semicarbazide compound | | (c)Nitroge n-containing aromatic compound | | Other additive solution | Total content |
|---|---|---|---|---|---|---|---|---|---|---|---|---|---|
| Example | A1 | A2 | a1 | a2 | a3 | a4 | a5 | b1 | b2 | c1 | c2 | Z1 | |
| 1 | 94.9 | 0 | 2.0 | 0 | 0 | 0 | 0 | 3.0 | 0 | 0.10 | 0 | 0 | 100 |
| 2 | 94.85 | 0 | 1.0 | 1.0 | 0 | 0 | 0 | 3.0 | 0 | 0.15 | 0 | 0 | 100 |
| 3 | 0 | 94.9 | 1.0 | 1.0 | 0 | 0 | 0 | 3.0 | 0 | 0.10 | 0 | 0 | 100 |
| 4 | 0 | 95.4 | 0 | 1.0 | 1.0 | 0 | 0 | 2.0 | 0.5 | 0.10 | 0 | 0 | 100 |
| 5 | 0 | 93.4 | 0 | 1.0 | 1.0 | 1.0 | 0 | 0 | 1.5 | 0.10 | 0 | 2.0 | 100 |
| 6 | 0 | 93.9 | 0 | 1.0 | 2.0 | 0.5 | 0 | 2.0 | 0.5 | 0.10 | 0 | 0 | 100 |
| 7 | 0 | 94.95 | 1.0 | 1.0 | 0 | 0 | 0 | 3.0 | 0 | 0.05 | 0 | 0 | 100 |

| Table 2 | | | | | | | | |
|---|---|---|---|---|---|---|---|---|
| | Example | 1 | 2 | 3 | 4 | 5 | 6 | 7 |
| Polyurethane elastic yarn | Ductility (%) | 410 | 400 | 495 | 495 | 485 | 490 | 495 |
| | Strength (cN) | 22 | 23 | 25 | 25 | 24 | 24 | 25 |
| | Setting Ability (%) | 25 | 25 | 17 | 18 | 17 | 17 | 17 |
| | Stress Relaxation (%) | 35 | 35 | 27 | 27 | 27 | 27 | 27 |
| | Heat Softening point (°C) | 185 | 185 | 210 | 212 | 207 | 210 | 209 |
| Heat Resistance | Heat resistance 1 (resistance to unsaturated fatty acids and heavy metals) | A | A | - | - | - | - | - |
| | Heat resistance 2 (resistance to repeated dyeing at 98°C) (%) | 70 | 74 | - | - | - | - | - |
| | Heat resistance 3 (resistance to unsaturated fatty acids and heavy metals) | - | - | A | A | A | A | A |
| | Heat resistance 4 (resistance to repeated dyeing at 130°C) (%) | - | - | 110 | 95 | 95 | 100 | 66 |
| Quality of Fabric Appearance | | A | A | A | A | A | A | A |

| TABLE 3 | | | | | | | | | | | | | |
|---|---|---|---|---|---|---|---|---|---|---|---|---|---|
| | Polymer | | (a) Hindered Phenol Compound | | | | | (b) N,N-dialkyl semicarbazide compound | | (c)Nitrogen-containing aromatic compound | | Other additive solution | Total content |
| Example | A1 | A2 | a1 | a2 | a3 | a4 | a5 | b1 | b2 | c1 | c2 | Z1 | |
| 8 | 0 | 94.85 | 1.0 | 1.0 | 0 | 0 | 0 | 3.0 | 0 | 0.15 | 0 | 0 | 100 |
| 9 | 0 | 94.8 | 1.0 | 1.0 | 0 | 0 | 0 | 3.0 | 0 | 0.20 | 0 | 0 | 100 |
| 10 | 0 | 94.75 | 1.0 | 1.0 | 0 | 0 | 0 | 3.0 | 0 | 0.25 | 0 | 0 | 100 |
| 11 | 0 | 94.7 | 1.0 | 1.0 | 0 | 0 | 0 | 3.0 | 0 | 0.30 | 0 | 0 | 100 |
| 12 | 0 | 94.9 | 0 | 0 | 2.0 | 0 | 0 | 3.0 | 0 | 0.10 | 0 | 0 | 100 |
| 13 | 0 | 94.9 | 0 | 0 | 0 | 2.0 | 0 | 3.0 | 0 | 0.10 | 0 | 0 | 100 |
| 14 | 0 | 94.9 | 1.0 | 1.0 | 0 | 0 | 0 | 3.0 | 0 | 0 | 0.1 | 0 | 100 |

| Table 4 | | | | | | | | |
|---|---|---|---|---|---|---|---|---|
| | Example | 8 | 9 | 10 | 11 | 12 | 13 | 14 |
| Polyurethane elastic yarn | Ductility (%) | 495 | 495 | 495 | 490 | 495 | 495 | 490 |
| | Strength (cN) | 25 | 25 | 25 | 24 | 25 | 25 | 25 |
| | Setting Ability (%) | 16 | 17 | 16 | 17 | 16 | 16 | 17 |
| | Stress Relaxation (%) | 27 | 27 | 27 | 27 | 26 | 26 | 28 |
| | Heat Softening point (°C) | 212 | 210 | 209 | 206 | 211 | 210 | 205 |
| Heat Resistance | Heat resistance 1 (resistance to unsaturated fatty acids and heavy metals) | - | - | - | - | - | - | - |
| | Heat resistance 2 (resistance to repeated dyeing at 98°C) (%) | - | - | - | - | - | - | - |
| | Heat resistance 3 (resistance to unsaturated fatty acids and heavy metals) | A | B | B | B | A | A | A |
| | Heat resistance 4 (resistance to repeated dyeing at 130°C) (%) | 107 | 51 | 48 | 47 | 115 | 119 | 74 |
| Quality of Fabric Appearance | | A | A | A | A | A | A | A |

| TABLE 5 | | | | | | | | | | | | | | |
|---|---|---|---|---|---|---|---|---|---|---|---|---|---|---|
| | Polymer | | (a) Hindered Phenol Compound | | | | | (b) N,N-dialkyl semicarbazide compound | | (c)Nitrogen-containing aromatic compound | | Other additive solution | Total content |
| Example | A1 | A2 | a1 | a2 | a3 | a4 | a5 | b1 | b2 | c1 | c2 | Z1 | |
| 15 | 0 | 96.84 | 0.03 | 0.03 | 0 | 0 | 0 | 3.0 | 0 | 0.10 | 0 | 0 | 100 |
| 16 | 0 | 96.78 | 0.06 | 0.06 | 0 | 0 | 0 | 3.0 | 0 | 0.10 | 0 | 0 | 100 |
| 17 | 0 | 96.66 | 0.3 | 0.3 | 0 | 0 | 0 | 3.0 | 0 | 0.10 | 0 | 0 | 100 |
| 18 | 0 | 91.90 | 1.0 | 4.0 | 0 | 0 | 0 | 3.0 | 0 | 0.10 | 0 | 0 | 100 |
| 19 | 0 | 90.90 | 1.0 | 5.0 | 0 | 0 | 0 | 3.0 | 0 | 0.10 | 0 | 0 | 100 |
| 20 | 0 | 89.90 | 1.0 | 6.0 | 0 | 0 | 0 | 3.0 | 0 | 0.10 | 0 | 0 | 100 |

Table 6

| | Example | 15 | 16 | 17 | 18 | 19 | 20 |
|---|---|---|---|---|---|---|---|
| Polyurethane elastic yarn | Ductility (%) | 505 | 500 | 495 | 485 | 455 | 425 |
| | Strength (cN) | 23 | 24 | 25 | 27 | 29 | 29 |
| | Setting Ability (%) | 15 | 15 | 16 | 18 | 20 | 24 |
| | Stress Relaxation (%) | 26 | 27 | 27 | 28 | 28 | 30 |
| | Heat Softening point (°C) | 206 | 208 | 209 | 213 | 213 | 212 |
| Heat Resistance | Heat resistance 1 (resistance to unsaturated fatty acids and heavy metals) | - | - | - | - | - | - |
| | Heat resistance 2 (resistance to repeated dyeing at 98°C) (%) | - | - | - | - | - | - |
| | Heat resistance 3 (resistance to unsaturated fatty acids and heavy metals) | B | B | A | A | A | A |
| | Heat resistance 4 (resistance to repeated dyeing at 130°C) (%) | 38 | 40 | 68 | 98 | 103 | 70 |
| Quality of Fabric Appearance | | B | A | A | A | B | B |

| TABLE 7 | | | | | | | | | | | | | | |
|---|---|---|---|---|---|---|---|---|---|---|---|---|---|---|
| | Polymer | | (a) Hindered Phenol Compound | | | | | (b) N,N-dialkyl semicarbazide compound | | (c)Nitrogen-containing aromatic compound | | Other additive solution | Total content |
| Example | A1 | A2 | a1 | a2 | a3 | a4 | a5 | b1 | b2 | c1 | c2 | Z1 | |
| 21 | 0 | 97.84 | 1.0 | 1.0 | 0 | 0 | 0 | 0.06 | 0 | 0.10 | 0 | 0 | 100 |
| 22 | 0 | 97.78 | 1.0 | 1.0 | 0 | 0 | 0 | 0.12 | 0 | 0.10 | 0 | 0 | 100 |
| 23 | 0 | 97.30 | 1.0 | 1.0 | 0 | 0 | 0 | 0.60 | 0 | 0.10 | 0 | 0 | 100 |
| 24 | 0 | 92.90 | 1.0 | 1.0 | 0 | 0 | 0 | 5.0 | 0 | 0.10 | 0 | 0 | 100 |
| 25 | 0 | 91.90 | 1.0 | 1.0 | 0 | 0 | 0 | 6.0 | 0 | 0.10 | 0 | 0 | 100 |
| 26 | 0 | 90.90 | 1.0 | 1.0 | 0 | 0 | 0 | 7.0 | 0 | 0.10 | 0 | 0 | 100 |

Table 8

| | Example | 21 | 22 | 23 | 24 | 25 | 26 |
|---|---|---|---|---|---|---|---|
| Polyurethane elastic yarn | Ductility (%) | 500 | 495 | 495 | 485 | 440 | 385 |
| | Strength (cN) | 23 | 24 | 25 | 26 | 29 | 24 |
| | Setting Ability (%) | 16 | 16 | 17 | 18 | 21 | 26 |
| | Stress Relaxation (%) | 26 | 26 | 26 | 28 | 28 | 31 |
| | Heat Softening point (°C) | 206 | 208 | 209 | 211 | 209 | 209 |
| Heat Resistance | Heat resistance 1 (resistance to unsaturated fatty acids and heavy metals) | - | - | - | - | - | - |
| | Heat resistance 2 (resistance to repeated dyeing at 98°C) (%) | - | - | - | - | - | - |
| | Heat resistance 3 (resistance to unsaturated fatty acids and heavy metals) | B | B | A | A | A | A |
| | Heat resistance 4 (resistance to repeated dyeing at 130°C) (%) | 35 | 44 | 88 | 114 | 110 | 88 |
| Quality of Fabric Appearance | | A | A | A | A | B | B |

TABLE 9

| | Polymer | | (a) Hindered Phenol Compound | | | | | (b) N,N-dialkyl semicarbazide compound | | (c)Nitrogen-containing aromatic compound | | Other additive solution | Total content |
|---|---|---|---|---|---|---|---|---|---|---|---|---|---|
| Example | A1 | A2 | a1 | a2 | a3 | a4 | a5 | b1 | b2 | c1 | c2 | Z1 | |
| Comp. 1 | 96.5 | 0 | 0 | 1.5 | 0 | 0 | 0 | 0 | 0 | 0 | 0 | 2.0 | 100 |
| Comp. 2 | 0 | 96.5 | 0 | 1.5 | 0 | 0 | 0 | 0 | 0 | 0 | 0 | 2.0 | 100 |
| Comp. 3 | 0 | 95.3 | 0 | 1.0 | 0 | 0 | 1.0 | 0 | 0 | 0 | 0.70 | 2.0 | 100 |
| Comp. 4 | 0 | 94.2 | 1.0 | 1.0 | 0 | 0 | 0 | 3.0 | 0 | 0.80 | 0 | 0 | 100 |
| Comp. 5 | 0 | 96.9 | 0 | 0 | 0 | 0 | 0 | 3.0 | 0 | 0.10 | 0 | 0 | 100 |
| Comp. 6 | 0 | 97.9 | 1.0 | 1.0 | 0 | 0 | 0 | 0 | 0 | 0.10 | 0 | 0 | 100 |

| Table 10 | | | | | | | |
|---|---|---|---|---|---|---|---|
| | Example (comparative) | Comp. 1 | Comp. 2 | Comp. 3 | Comp. 4 | Comp. 5 | Comp.6 |
| Polyurethane elastic yarn | Ductility (%) | 400 | 490 | 495 | 490 | 480 | 500 |
| | Strength (cN) | 21 | 25 | 24 | 24 | 22 | 23 |
| | Setting Ability (%) | 25 | 18 | 18 | 19 | 15 | 16 |
| | Stress Relaxation (%) | 35 | 28 | 27 | 27 | 26 | 26 |
| | Heat Softening point (°C) | 180 | 205 | 205 | 202 | 202 | 205 |
| Heat Resistance | Heat resistance 1 (resistance to unsaturated fatty acids and heavy metals) | C | - | - | - | - | - |
| | Heat resistance 2 (resistance to repeated dyeing at 98°C) (%) | 14 | - | - | - | - | - |
| | Heat resistance 3 (resistance to unsaturated fatty acids and heavy metals) | - | C | B | B | C | C |
| | Heat resistance 4 (resistance to repeated dyeing at 130°C) (%) | - | 10 | 22 | 20 | 0 | 31 |
| Quality of Fabric Appearance | | C | B | B | B | C | B |

In this way, in the presence of compound (a) and compound (b), the addition of nitrogen-containing aromatic compound (c) has a great effect on heat resistance, particularly heat resistance when unsaturated fatty acids and heavy metals are attached and heat resistance to repeated dyeing. That is, in the examples in which compound (c) was added in the presence of compound (a) and compound (b), a marked improvement in heat resistance was seen compared to comparative examples 1 and 2 in which the added amount of compound (c) was 0 wt%. From examples 1 to 6, example 8 and examples 12 to 14, it was seen that it is important for excellent performance that the added amount of compound (c) is 0.07 to 0.18 wt%. Furthermore, a trend was seen, in that when the added amount of compound (c) was increased, heat resistance decreased. That is, in comparative examples 3 and 4 in which the added amount of compound (c) was more than 0.3, heat resistance was reduced to the same level as comparative example 2 in which compound (c) was not added.

Industrial Usability

The polyurethane elastic yarn according to the present invention exhibits excellent heat resistance during dyeing even when unsaturated fatty acids and heavy metals are attached, and it also has the excellent original characteristics of elastic yarn, such as high elastic recoverability and high strength and ductility. Therefore, it is particularly well suited to applications in which it is blended with other fibers like polyester fibers or nylon fibers and then dyed at high temperature.

For example, the polyurethane elastic yarn according to the present invention can be used in applications where it is used alone and where it is combined with various fibers to obtain an excellent stretch fabric, from which stretch products can be made by knitting, weaving and braiding.

Specific applications in which it can be used include various textile products such as socks, stockings, circular

knits, tricot, swimwear, ski pants, work clothes, golf pants, wet suits, brassieres, girdles and gloves, elastic materials, waterproof elastic materials of sanitary products such as paper diapers, elastic materials for waterproof materials, imitation food, artificial flowers, electrical insulation materials, wiping cloth, copy cleaners, gaskets and the like.

## Claims

1. A polyurethane elastic yarn comprising a polymer diol and a diisocyanate, wherein said polyurethane elastic yarn comprises (a) a hindered phenol compound, (b) an N,N-dialkyl semicarbazide compound and (c) a nitrogen-containing aromatic compound, and wherein the nitrogen-containing aromatic compound is at least 0.01 wt% and at most 0.30 wt% by weight of the yarn.

2. The polyurethane elastic yarn according to claim 1, wherein the molecular weight of the nitrogen-containing aromatic compound (c) is at least 300.

3. The polyurethane elastic yarn according to claim 1, wherein the nitrogen-containing aromatic compound (c) is an aromatic compound having at least two nitrogen atoms on the aromatic ring.

4. The polyurethane elastic yarn according to any of claim 1, wherein the hindered phenol compound (a) and nitrogen-containing aromatic compound (c) are triazine-based compounds.

5. The polyurethane elastic yarn according to claim 4, wherein the hindered phenol compound (a) is 1,3,5-tris(4-t-butyl-3-hydroxy-2,6-dimethylbenzyl)-1,3,5-triazine-2,4,6(1H,3H,5H)-trione, and the nitrogen-containing aromatic compound (c) is 2,4-di(2',4'-dimethylphenyl)-6-(2"-hydroxy-4"-alkoxyphenyl)-1,3,5-triazine.

6. The polyurethane elastic yarn according to claim 1, wherein the hindered phenol compound (a) is a polymer derived from cresol.

7. The polyurethane elastic yarn according to claim 1, wherein the contained amount of hindered phenol compound (a) is at least 0.1 wt% and at most 6.0 wt%, and the contained amount of N,N-dialkyl semicarbazide compound (b) is at least 0.1 wt% and at most 6.0 wt%.

8. A method for preparing polyurethane elastic yarn wherein (a) a hindered phenol compound, (b) an N,N-dialkyl semicarbazide compound, and (c) a nitrogen-containing aromatic compound are added to a solution of polyurethane comprising a polymer diol and diisocyanate, to provide a polyurethane spinning solution containing the nitrogen-containing aromatic compound (c) in a proportion of at least 0.01 wt% and at most 0.30 wt% with respect to polyurethane, and spinning said solution.

## INTERNATIONAL SEARCH REPORT

International application No.
PCT/JP2008/060841

A. CLASSIFICATION OF SUBJECT MATTER
*D01F6/94*(2006.01)i, *C08K5/13*(2006.01)i, *C08K5/30*(2006.01)i, *C08K5/3492*(2006.01)i, *C08L75/04*(2006.01)i

According to International Patent Classification (IPC) or to both national classification and IPC

B. FIELDS SEARCHED

Minimum documentation searched (classification system followed by classification symbols)
D01F1/00-6/96, D01F9/00-9/04, C08L75/00-75/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-169700 A (Du Pont-Toray Co., Ltd.), 20 June, 2000 (20.06.00), Claims 1, 4 to 6; Par. Nos. [0020] to [0023] (Family: none) | 1-8 |
| A | JP 3028237 B2 (E.I. Du Pont De Nemours & Co.), 04 April, 2000 (04.04.00), Claim 1 & US 5059647 A & EP 0420687 A2 | 1-8 |
| A | JP 2006-028669 A (Opelontex Co., Ltd.), 02 February, 2006 (02.02.06), Claim 1; Par. No. [0016] (Family: none) | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 November, 2008 (10.11.08) | 18 November, 2008 (18.11.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/060841

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-200148 A (Asahi Chemical Industry Co., Ltd.), 27 July, 1999 (27.07.99), Claim 1; Par. Nos. [0003], [0042] (Family: none) | 1-8 |
| E,A | JP 2008-069506 A (Opelontex Co., Ltd.), 27 March, 2008 (27.03.08), Claims 1 to 2; Par. No. [0006] (Family: none) | 1-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000169700 A
- JP 3028237 B